# EUROPEAN PATENT SPECIFICATION

(11) **EP 4 151 329 B1**
(45) Date of publication and mention of the grant of the patent: **25.11.2026**
(21) Application number: 21837469.2
(22) Date of filing: 04.06.2021
(51) Int. Cl.: B21D 5/01, B21D 39/20, G05B 23/02, B23K 9/025, G06N 20/00

(54) **STEEL PIPE ROUNDNESS PREDICTION MODEL GENERATION METHOD, STEEL PIPE ROUNDNESS PREDICTION METHOD, STEEL PIPE ROUNDNESS CONTROL METHOD, STEEL PIPE MANUFACTURING METHOD, AND STEEL PIPE ROUNDNESS PREDICTION DEVICE**
VERFAHREN ZUR ERZEUGUNG EINES STAHLROHRRUNDHEITSVORHERSAGEMODELLS, STAHLROHRRUNDHEITSVORHERSAGEVERFAHREN, STAHLROHRRUNDHEITSSTEUERUNGSVERFAHREN, STAHLROHRHERSTELLUNGSVERFAHREN UND STAHLROHRRUNDHEITSVORHERSAGEVORRICHTUNG
PROCÉDÉ DE GÉNÉRATION DE MODÈLE DE PRÉDICTION DE RONDEUR DE TUYAU D'ACIER, PROCÉDÉ DE PRÉDICTION DE RONDEUR DE TUYAU D'ACIER, PROCÉDÉ DE COMMANDE DE RONDEUR DE TUYAU D'ACIER, PROCÉDÉ DE FABRICATION DE TUYAU D'ACIER ET DISPOSITIF DE PRÉDICTION DE RONDEUR DE TUYAU D'ACIER

(30) Priority: 10.07.2020 JP 2020118874
(43) Date of publication of application: 22.03.2023
(73) Proprietor: JFE Steel Corporation, Tokyo 100-0011 (JP)
(72) Inventor: HINATA, Kosuke, Tokyo 100-0011 (JP); HORIE, Masayuki, Tokyo 100-0011 (JP); TAKASHIMA, Yukio, Tokyo 100-0011 (JP)
(74) Representative: Grünecker Patent- und Rechtsanwälte PartG mbB
(86) International application number: PCT/JP2021/021415
(87) International publication number: WO 2022/009575

(56) References cited:
- WO-A1-2019/176655
- JP-B1- 6 519 896
- JP-B2- 4 870 200
- KLANCNIK SIMON: "Prediction of technological parameters of sheet metal bending in two stages using feed forward neural network", TEHNICKI VJESNIK, vol. 23, no. 4, 1 August 2016 (2016-08-01), HR, XP093086024, ISSN: 1330-3651, DOI: 10.17559/TV-20141201225004
- ZHANG ZIQIAN ED - SLAVIC JANKO ET AL: "Modeling and simulation for cross-sectional ovalization of thin-walled tubes in continuous rotary straightening process", INTERNATIONAL JOURNAL OF MECHANICAL SCIENCES, vol. 153, 15 January 2019 (2019-01-15), pages 83 - 102, XP085622695, ISSN: 0020-7403, DOI: 10.1016/J.IJMECSCI.2019.01.021
- XU WANG ET AL: "Applications of Finite Element Method in Large-Diameter Longitudinal Welded Pipe", MEASURING TECHNOLOGY AND MECHATRONICS AUTOMATION, 2009. ICMTMA '09. INTERNATIONAL CONFERENCE ON, IEEE, PISCATAWAY, NJ, USA, 11 April 2009 (2009-04-11), pages 22 - 25, XP031511381, ISBN: 978-0-7695-3583-8
- REN, QIANG: "Numerical study on the X80 UOE pipe forming process", JOURNAL OF MATERIAL PROCESSING TECHNOLOGY, vol. 215, 2015, pages 264 - 277, XP029064198, DOI: 10.1016/j.jmatprotec.2014.08.013

## Description

### Field

The present invention relates to a steel pipe out-of-roundness control method, a steel pipe manufacturing method, and a steel pipe out-of-roundness prediction device.

### Background

Techniques of manufacturing a steel pipe having a large diameter and a large thickness used for a line pipe and the like include a wide-spread technique of manufacturing a steel pipe (referred to as UOE steel pipe) obtained by press working on a steel sheet having a predetermined length, width, and thickness into a U shape, press forming the sheet into an O shape and welding a butt portion to form the sheet into a steel pipe, and expanding the diameter of the steel pipe (referred to as pipe expansion) to improve out-of-roundness. However, the manufacturing step of the UOE steel pipe requires a large pressing pressure in the step of performing press working on the steel sheet to be formed into a U shape and an O shape, making it necessary to use a large-scale press machine.

To manage this issue, there is a proposed technique in manufacturing a steel pipe having a large diameter and a large thickness, which is a technique of press forming with reduced pressing pressure. Specifically, the technique that has been put into practical use is a technique in which, after bending is applied to the end of a steel sheet in the width direction (referred to as end bending), a press bending step of performing a 3-point bending press a plurality of times by punching is conducted to produce a formed body having a U-shaped cross section (hereinafter, referred to as a U-shaped formed body), a seam gap reduction step of reducing a seam gap portion of the formed body having a U-shaped cross section is conducted to form the pipe into an open pipe, butt portions are welded to form a steel pipe, and finally a pipe expanding device is inserted into the steel pipe to expand an inner diameter of the steel pipe. The pipe expanding device used is a device which includes a plurality of pipe expanding tools each having a curved surface obtained by dividing an arc into a plurality of portions and brings the curved surface of the pipe expanding tool into contact with the inner surface of the steel pipe so as to expand the steel pipe and fix the shape of the steel pipe.

In the press bending step, increasing the number of times of the 3-point bending press improves the out-of-roundness of the steel pipe after the pipe expanding step, although it takes a long time to form the steel pipe to have a U-shaped cross section. On the other hand, reducing the number of times of the 3-point bending press would result in a problem that the cross-section of the steel pipe takes a substantially polygonal shape, making it difficult to form a circular cross-sectional shape. To handle this, the number of times of 3-point bending press (for example, 5 to 13 times in a steel pipe having a diameter of 1200 mm) is empirically determined in operation depending on the dimensions of the steel pipe. Regarding the operational conditions of the press bending step for improving the out-of-roundness of the steel pipe after the pipe expanding step, many proposals have been made regarding the setting method thereof.

For example, Patent Literature 1 describes a method for performing 3-point bending press as few times as possible and a method of expanding a pipe by bringing a plurality of pipe expanding tools disposed in a circumferential direction of a pipe expanding device into contact with a non-deformed portion, which is not deformed by the 3-point bending press.

Patent Literature 2 describes a method of improving the out-of-roundness of the steel pipe after the pipe expanding step by setting the curvature radius of the outer circumferential surface of the punch used in the 3-point bending press and the curvature radius of the outer peripheral surface of the pipe expanding tool satisfy a predetermined relational expression.

Patent Literature 3 discloses a method having the features of the preamble of claim 1. It describes a method, as a manufacturing method capable of efficiently manufacturing a steel pipe having satisfactory out-of-roundness without requiring an excessive pressing force in the press bending step, in which there is provided, in execution of 3-point bending press, a light-worked portion having an extremely small curvature compared to other regions, or an unworked portion in which bending processing is omitted, in at least a part of a steel sheet. Patent Literature 3 also describes an operation, in the seam gap reduction step, which is application of a pressing force to a portion separated by a predetermined distance from the center of the light-worked portion or the unworked portion without restraining the light-worked portion or the unworked portion. Incidentally, an O-press device is typically used in the seam gap reduction step performed after the press bending step.

In this regard, Patent Literature 4 describes another method of reducing the seam gap (hereinafter, referred to as a "closing press method") in which, after a non-circular preform (formed body with U-shaped cross section) is formed by a 3-point bending press, and then, instead of a normal O-press step, a pushing force is applied from the outside of the non-circular preform by a pushing tool disposed on an upper portion so as to face a lower support roll while supporting the non-circular preform by two lower support rolls, thereby reducing the seam gap. This method is characterized in that applying pushing force by using a pushing tool from the outside of the non-circular preform can simplify the device configuration, eliminating the necessity to prepare a die according to the outer diameter of the steel pipe as in the O-press device. Patent Literature 4 also describes a method of intentionally providing a relatively slightly formed region in a part at the 3-point bending press and applying a pushing force to the region in a formed body having a U-shaped cross section, in a closing press method used in the seam gap reduction step.

On the other hand, Non Patent Literature 1 describes a method of analyzing, with calculation using a finite element method, an influence of operational conditions of the pipe expanding step on the out-of-roundness of the steel pipe after the pipe expanding step.

Non Patent Literature 2 discloses a sheet metal bending in two stages and predicting and testing of the final bend angle by means of a feed-forward neural network.

Non Patent Literature 3 discloses a thin-walled steel pipe out-of-roundness prediction method for predicting an out-of-roundness of a thin-walled steel pipe after the initial large bending stage in tube's continuous rotary straightening process.

Non Patent Literature 4 discloses a finite element analysis carried out on steel pipe manufactured by UOE-process. The finite element analysis simulates the forming process and predicts the processing parameters.

### Citation List

### Patent Literature

Patent Literature 1: JP 2012-170977 A
Patent Literature 2: JP 5541432 B1
Patent Literature 3: JP 6015997 B1
Patent Literature 4: JP 2012-250285 A

### Non Patent Literature

Non Patent Literature 1: Journal of the Japan Society for Technology of Plasticity, vol.59, No. 694 (2018), p. 203-208
Non Patent Literature 2: Clancnik, Simon et al: "Prediction of technological parameters of sheet metal bending in two stages using feed forwards neural network", Tehnicki Vjeshnik, vol. 23, no. 4, August 1, 2016
Non Patent Literature 3: Zhang, Ziqian et al: "Modeling and simulation for cross-sectional ovalization oft hin-walled tubes in continuous rotary straightening process", International Journal of Mechanical Sciences, vol. 153, pages 83-102, 2019
Non Patent Literature 4: Xu Wang et al: "Applications of Finite Element Method in Large-Diameter Longitudinal Welded Pipe", Measuring Technology and Mechatronics Automation, pages 22-25, April 11, 2009 Summary

### Technical Problem

The method described in Patent Literature 1 is a method of improving the out-of-roundness of the steel pipe after the pipe expanding step by associating the pressing position of the 3-point bending press with the pressing position of the pipe expanding tool. However, the steel pipe manufacturing step includes a plurality of steps including at least a press bending step, a seam gap reduction step, a welding step, and a pipe expanding step. Therefore, the method described in Patent Literature 1 has no consideration of the influence of the operational conditions of other steps on the out-of-roundness of the steel pipe after the pipe expanding step, making it difficult to always ensure improvement of the out-of-roundness of the steel pipe after the pipe expanding step.

Similarly to the method described in Patent Literature 1, the method described in Patent Literature 2 is a method in which the curvature radius is set such that the curvature radius of the outer circumferential surface of the punch used in the 3-point bending press as the operational condition of the press bending step and the curvature radius of the outer circumferential surface of the pipe expanding tool as the operational condition of the pipe expanding step satisfy a predetermined relational expression, thereby improving the out-of-roundness of the steel pipe after the pipe expanding step. However, in the method described in Patent Literature 2, similarly to the method described in Patent Literature 1, there is a problem of incapability of considering the influence of steps other than the press bending step, such as the seam gap reduction step.

The method described in Patent Literature 3 is a method of improving the out-of-roundness of the steel pipe after the pipe expanding step by changing the working condition of the 3-point bending press in the press bending step depending on the position of the steel sheet and setting the working condition to a condition associated with the forming condition in the seam gap reduction step. However, the method described in Patent Literature 3 has a problem that presence of variations in the sheet thickness or the material of the steel sheet as a material leads to variations in the out-of-roundness of the steel pipe after the pipe expanding step varies even under the same forming condition.

The method described in Patent Literature 4 is also a method of improving the out-of-roundness of the steel pipe after the pipe expanding step by setting a conditions such that the forming condition of the U-shaped cross section into the formed body in the press bending step and the forming condition in the seam gap reduction step are associated with each other. However, in the method described in Patent Literature 4, there is also a problem that occurrence of variation in the sheet thickness or the material of the steel sheet as a material leads to a problem of variation in the out-of-roundness of the steel pipe after the pipe expanding step even under the same forming condition.

On the other hand, as described in the method in Non Patent Literature 1, the influence of the operational parameter of the pipe expanding step on the out-of-roundness can be quantitatively predicted by analyzing the pipe expanding step using the finite element method as offline calculation. However, the method described in Non Patent Literature 1 has also a problem of incapability of considering the influence of the operational conditions of other steps on the out-of-roundness. Furthermore, such numerical analysis execution also include a problem of the long time required for the calculation, making it difficult to predict the out-of-roundness online.

The present invention has been made to solve the above problems, and its one object to provide a steel pipe out-of-roundness prediction device capable of accurately and promptly predicting out-of-roundness of the steel pipe after the pipe expanding step in the steel pipe manufacturing step including a plurality of steps. Another object of the present invention is to provide a steel pipe out-of-roundness control method capable of accurately controlling the out-of-roundness of the steel pipe after the pipe expanding step in the steel pipe manufacturing step including a plurality of steps. Another object of the present invention is to provide a steel pipe manufacturing method capable of manufacturing a steel pipe having a desired out-of-roundness with good yield.

### Solution to Problem

The invention is as specified in the independent claims. Preferred embodiments thereof are specified in the dependent claims.

### Advantageous Effects of Invention

According to the steel pipe out-of-roundness control method of the present invention, it is possible to generate an out-of-roundness prediction model that accurately and promptly predicts an out-of-roundness of a steel pipe after a pipe expanding step in a steel pipe manufacturing step including a plurality of steps. In addition, according to the steel pipe out-of-roundness prediction method and the steel pipe out-of-roundness prediction device of the present invention, it is possible to accurately and promptly predict out-of-roundness of the steel pipe after the pipe expanding step in the steel pipe manufacturing step including a plurality of steps. In addition, according to a steel pipe out-of-roundness control method according to the present invention, it is possible to accurately control the out-of-roundness of the steel pipe after the pipe expanding step in the steel pipe manufacturing step including a plurality of steps. Furthermore, according to the steel pipe manufacturing method according to the present invention, it is possible to manufacture a steel pipe having desired out-of-roundness with good yield.

### Brief Description of Drawings

FIG. 1 is a diagram illustrating a steel pipe manufacturing step according to an embodiment of the present invention.
FIG. 2 is a diagram illustrating an example of a step of forming a formed body having a U-shaped cross section using a press bending device.
FIG. 3 is a diagram illustrating an example of a step of forming a formed body having a U-shaped cross section using a press bending device.
FIG. 4 is a diagram illustrating a configuration example of an O-press device.
FIG. 5 is a diagram illustrating a configuration example of a closing press device.
FIG. 6 is a diagram illustrating a configuration example of a pipe expanding device.
FIG. 7 is a diagram illustrating a configuration example of a measuring device of an outer diameter shape of a steel pipe.
FIG. 8 is a block diagram illustrating a configuration of a steel pipe out-of-roundness prediction model generation device according to an embodiment of the present invention.
FIG. 9 is a block diagram illustrating a configuration of an out-of-roundness offline calculation unit illustrated in FIG. 8.
FIG. 10 is a diagram illustrating an example of a change in a relationship between a press working amount and out-of-roundness of a steel pipe after a pipe expanding step according to a change in the operational condition of the press bending step.
FIG. 11 is a diagram illustrating an example of a press depression position and a press depression amount for each number of times of pressing.
FIG. 12 is a diagram illustrating a flow of processing of predicting out-of-roundness of the steel pipe after the pipe expanding step before the start of the press bending step.
FIG. 13 is a diagram illustrating an example of a finite element model.
FIG. 14 is a perspective view illustrating an overall configuration of a C-press device.
FIG. 15 is a cross-sectional view illustrating a configuration of a press mechanism.
FIG. 16 is a diagram illustrating a steel pipe out-of-roundness control method according to an embodiment of the present invention.
FIG. 17 is a diagram illustrating a configuration of a steel pipe out-of-roundness prediction device according to an embodiment of the present invention.

### Description of Embodiments

### [Steel pipe manufacturing step]

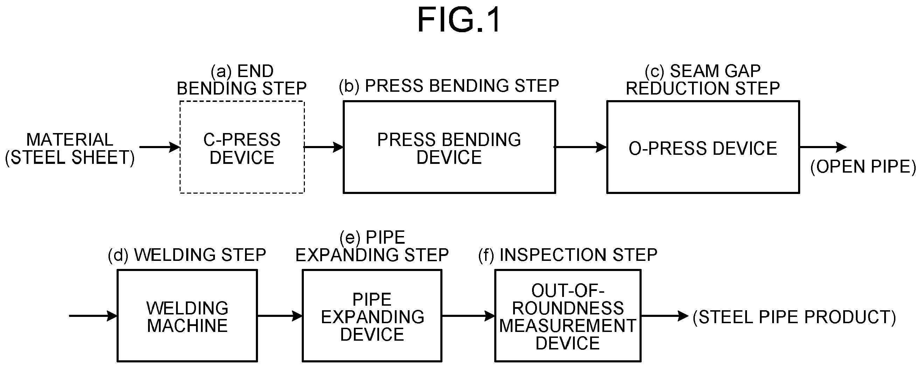

FIG. 1 is a diagram illustrating a steel pipe manufacturing step according to an embodiment of the present invention. As illustrated in FIG. 1, the steel pipe manufacturing step according to an embodiment of the present invention uses a thick steel sheet manufactured by a thick sheet rolling step which is a preprocessing step of the steel pipe manufacturing step, as a steel sheet to be a material. Here, the thick steel sheet typically has a yield stress of 245 to 1050 MPa, a tensile strength of 415 to 1145 MPa, a sheet thickness of 6.4 to 50.8 mm, a sheet width of 1200 to 4500 mm, and a length of 10 to 18 m. In addition, the end of the thick steel sheet in the width direction is ground in advance into a chamfered shape referred to as a bevel. This step is done for preventing overheating of the outer surface corner portion of the end of the sheet in the width direction to stabilize the welding strength in the subsequent welding step. In addition, since the width of the thick steel sheet will influence the outer diameter after formation into the steel pipe, the width is adjusted to a predetermined range in consideration of the deformation history in the subsequent steps.

The steel pipe manufacturing step sometimes includes execution of an end bending step of applying bending to the end of the steel sheet in the width direction. The end bending step, which is performed by a C-press device, performs an end bending processing (also referred to as crimping work) on the end of the steel sheet in the width direction. The C-press device includes a pair of upper and lower dies and a pair of upper and lower clamps that hold the central portion of the steel sheet in the width direction. Since the length of the die is shorter than the length of the steel sheet, the end bending processing is repeated while sequentially feeding the steel sheet in the longitudinal direction. Such end bending processing is applied on both ends of the steel sheet in the width direction. Since it is difficult to apply a bending moment to the end in the width direction in the 3-point bending press, the end bending step is performed to apply bending deformation in advance by the dies. This makes it possible to improve the out-of-roundness of the steel pipe as a final product. At this time, examples of the operational parameters for specifying the machining conditions include: an end bending processing width which is a length at which the die comes into contact with the steel sheet from the end in the width direction of the steel sheet toward the central direction in the width direction; a gripping force of the clamp; a feeding amount of the steel sheet when the end bending processing is repeated in the longitudinal direction of the steel sheet, a feeding direction, the number of times of feeding, and the like.

The subsequent press bending step is a step of processing the steel sheet into a formed body having a **U-**shaped cross section by performing 3-point bending press using a punch a plurality of times by a press bending device. The subsequent seam gap reduction step is a step of reducing the seam gap portion of the formed body having a U-shaped cross section by using an O-press device to form an open pipe. Note that the closing press method described in Patent Literature 4 may be used instead of the O-press device. The subsequent welding step is a step of restraining the seam gap portion formed at the end of the open pipe so as to allow the ends to be in contact with each other, and joining the ends to each other. With this step, the formed body is formed into a steel pipe having the ends joined to each other. The subsequent pipe expanding step is a step of using a pipe expanding device including a plurality of pipe expanding tools each having a curved surface obtained by dividing an arc into a plurality of portions to expand the steel pipe by bringing the curved surface of the pipe expanding tool into contact with the inner surface of the steel pipe. The steel pipe manufactured in this manner is subjected to the determination, in the inspection step, as to whether the quality such as the material property, the appearance, and the dimension satisfies a predetermined specification, and then shipped as a product. The inspection step includes an out-of-roundness measurement step of measuring the out-of-roundness of the steel pipe.

In the present embodiment, an end bending step, a press bending step, a seam gap reduction step, and a pipe expanding step, among a series of manufacturing steps including formation of a steel sheet into an open pipe and a pipe expanding step performed after welding, are referred to as "forming processing step". These steps are common steps of controlling the dimensions and shape of the steel pipe by applying plastic deformation to the steel sheet. Hereinafter, individual steps included in the steel pipe manufacturing step will be described in detail with reference to the drawings.

### <End bending step>

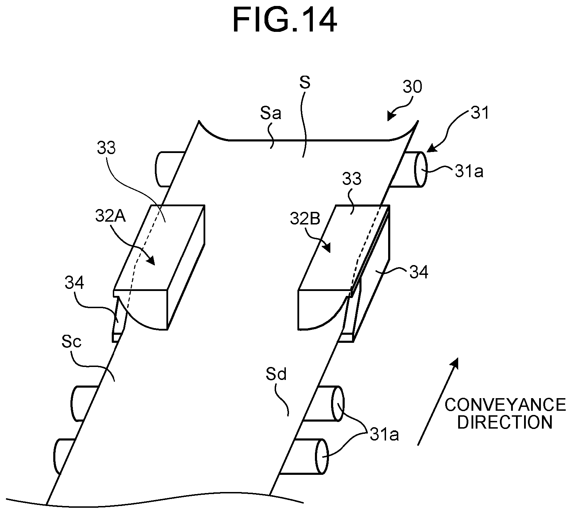

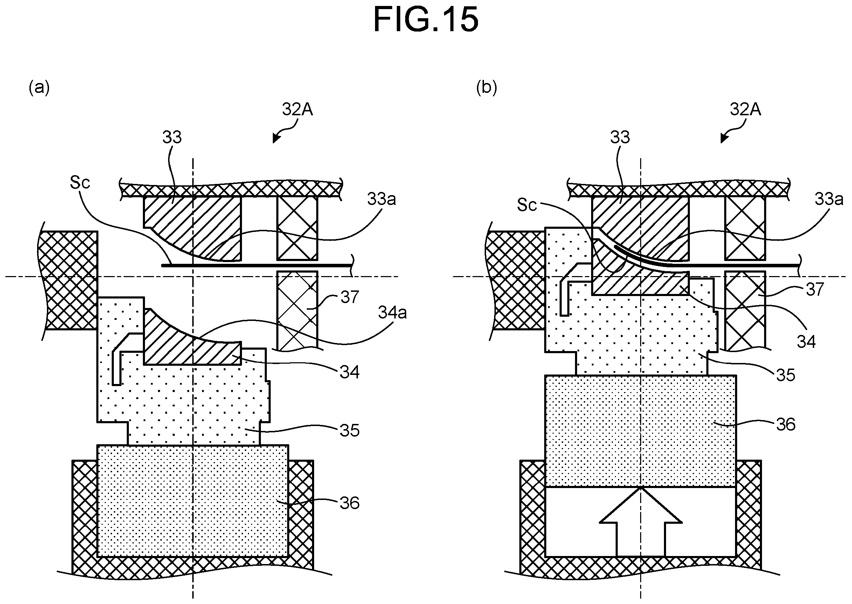

A C-press device that performs end bending processing will be described in detail with reference to FIGS. 14 and 15. FIG. 14 is a perspective view illustrating an overall configuration of the C-press device. As illustrated in FIG. 14, the C-press device 30 includes: a conveyance mechanism 31 that conveys a steel sheet S in a direction along the longitudinal direction as a conveyance direction; a press mechanism 32A that performs bending processing on one width direction end Sc of the sheet to a predetermined curvature with the downstream side of the steel sheet S in the conveyance direction as a front side; a press mechanism 32B that performs bending processing on the other end Sd in the width direction to a predetermined curvature; and an interval adjustment mechanism (not illustrated) that adjusts the interval between the press mechanisms 32A and 32B on left and right according to the width of the steel sheet S subjected to end bending processing. The conveyance mechanism 31 includes a plurality of rotationally driven conveyance rolls 31a each disposed in front of and behind the press mechanisms 32A and 32B. Note that a reference sign Sa in the drawing indicates a leading end (front end in the longitudinal direction) of the steel sheet S**.**

FIG. 15(a) illustrates a cross section in the width direction of the press mechanism 32A that performs bending processing on the one end Sc in the width direction of the steel sheet S as viewed in the direction from the upstream side to the downstream side in the conveyance direction of the steel sheet S**.** The press mechanism 32A and the press mechanism 32B are bilaterally symmetrical and have an identical configuration. The press mechanisms 32A/32B include an upper die 33 and a lower die 34 as a pair of dies arranged to face each other in the vertical direction, and a hydraulic cylinder 36 as a die moving means that pushes up the lower die 34 together with a tool holder 35 (moves in a direction approaching the upper die 33) and clamps the dies with a predetermined pressing force. The press mechanisms 32A and 32B may include a clamp mechanism 37 that grips the steel sheet S on the inner side of the upper die 33 and the lower die 34 in the width direction. The length of the steel sheet S in the longitudinal direction of the upper die 33 and the lower die 34 is normally shorter than the length of the steel sheet S. In this case, the end bending processing is applied a plurality of times while intermittently feeding the steel sheet S in the longitudinal direction by the conveyance mechanism 31 (refer to FIG. 14).

In the end bending step, the lower die 34 in contact with a surface on the outer side in the bending direction of the ends Sc and Sd in the width direction of the steel sheet S subjected to the end bending processing has a pressing surface 34a facing the upper die 33. The upper die 33 has a forming surface 33a having a convex curved surface facing the pressing surface 34a and having a curvature radius corresponding to the inner diameter of the steel pipe to be manufactured. The pressing surface 34a has a concave curved surface shape approaching the upper die 33 toward the outside in the width direction. However, although the pressing surface 34a of the lower die 34 has a concave curved surface shape, the pressing surface may be any surface that approaches the upper die 33 as it goes outward in the width direction, and may be an inclined plane. The curved surface shape of the upper die 33 and the lower die 34 is appropriately designed according to the thickness, the outer diameter of the steel pipe, and the like of the steel sheet S, and may be appropriately selected and used according to the material to be processed.

FIG. 15(b) is a cross section of the press mechanism 32A in the width direction at the same position as FIG. 15(a), illustrating a state in which the lower die 34 is pushed up by the hydraulic cylinder 36 and clamped. The lower die 34 is pushed up by the hydraulic cylinder 36, and the end Sc of the steel sheet S in the width direction has been subjected to bending processing so as to be formed into a shape along the arc-shaped forming surface 33a of the upper die 33. The width to be subjected to end bending (end bending processing width) varies depending on the width of the steel sheet S, and is generally about 100 to 400 mm.

### <Press bending step>

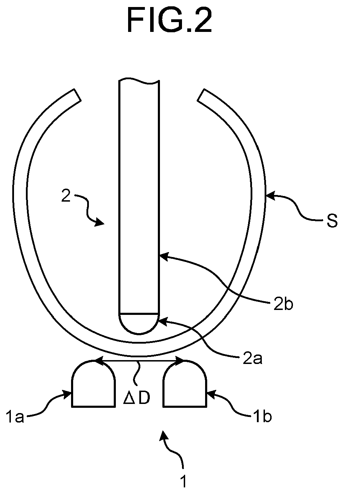

FIG. 2 is a diagram illustrating an example of a step of forming a formed body having a U-shaped cross section using a press bending device. In the drawing, reference numeral 1 denotes a die disposed in a conveyance path of the steel sheet S. The die 1 includes a rod-shaped members 1a and 1b, provided in a left-right pair that support the steel sheet S at two positions in the conveyance direction, and an interval ΔD of the members can be changed according to the size of the steel pipe to be formed. In addition, a reference numeral 2 denotes a punch movable in a direction approaching and separating from the die 1. The punch 2 includes: a punch leading end 2a having a downward convex processing surface that is in direct contact with the steel sheet S and presses the steel sheet S in a concave shape; and a punch support 2b that is connected to the back surface of the punch leading end 2a and supports the punch leading end 2a. The maximum width of the punch leading end 2a is normally equal to the width (thickness) of the punch support 2b.

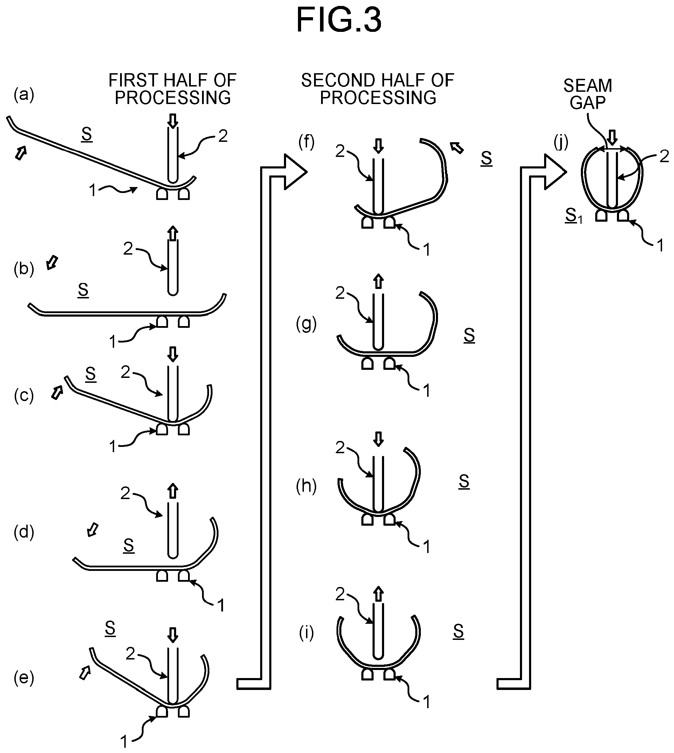

When performing bending processing on the steel sheet S using the press bending device having the above-described configuration, the steel sheet S is placed on the die 1, and 3-point bending press is sequentially performed by the punch 2 from both ends of the steel sheet S in the width direction toward the central portion as illustrated in FIG. 3 while intermittently feeding the steel sheet S at a predetermined feeding amount. FIG. 3 is a diagram illustrating a step of forming a formed body S₁ as illustrated in the right row diagram (j) in which a steel sheet S, preprocessed with end bending processing, is processed as in the top to the bottom of the left row (first half of processing (a) to (e)) then processed as in the top to the bottom of the center row (second half of processing (f) to (i)), by operations including bending processing and feeding of the steel sheet S. In FIG. 3, arrows assigned to the steel sheet S and the punch 2 indicate the moving directions of the steel sheet S and the punch 2 in individual steps. In the formed body S₁ having a U-shaped cross section as a result of being processed in this step, the gap between the ends is referred to as a "seam gap".

Here, examples of the operational parameters of determining operational conditions for the press bending step include the number of times of pressing, press position information, a press depression amount, a lower die interval, a punch curvature, and the like.

The number of times of pressing refers to the total number of times of pressing the steel sheet in the width direction by the 3-point bending press. The more the number of times of pressing, the smoother curved shape is obtained as a formed body having the U-shaped cross section, and the more improvement obtained in the out-of-roundness of the steel pipe after the pipe expanding step.

The press position information refers to a position in the width direction of the steel sheet to be pressed by the punch. Specifically, the position can be specified by a distance from one end of the steel sheet in the width direction or a distance based on the central portion of the steel sheet in the width direction. The press position information is preferably treated as data linked to the number of times of pressing (orders including the first to N-th times of pressing).

The press depression amount refers to a pushing amount of the punch at each press depression position. The press depression amount is defined as an amount by which the lower end surface of the punch leading end 2a protrudes downward from a line connecting points on the uppermost surfaces of the die 1 illustrated in FIG. 2. At this time, since the pushing amount of the punch leading end 2a can be set to a different value for each pressing, it is preferable to treat the number of times of pressing and the press depression amount as linked data. Therefore, when the number of times of pressing is N, the operational condition of the press bending step is specified by 1 to N datasets with the number of times of pressing, the press position information, and the press depression amount as one set of datasets.

The reason why these datasets are used is that, by partially changing the press position and the pushing amount of the punch in the press bending step, the entire cross-sectional shape the pipe changes in a state of an open pipe, which has an influence on the out-of-roundness of the steel pipe after the pipe expanding step. Still, there is no need to use all the N datasets as input variables of an out-of-roundness prediction model to be described below. It is allowable to use a method of selecting a condition having a large influence on the out-of-roundness of the steel pipe after the pipe expanding step and generating an out-of-roundness prediction model using press position information and the press depression amount at the start (first time) or the end (N-th time) of the press bending step.

The lower die interval is an interval between the rod-shaped members 1a and 1b, provided in a left-right pair as illustrated in FIG. 2, and is a parameter expressed by ΔD in the drawing. An increase in the lower die interval will change the local curvature of the steel sheet even for the same press depression amount, having an influence on the out-of-roundness of the steel pipe after the pipe expanding step. Therefore, it is preferable to use the lower die interval set according to the size of the steel pipe to be formed as the operational parameter of the press bending step. In addition, in a case where the lower die interval is changed every time the punch is pushed, data linked with the number of times of pressing may be used as the operational parameters.

The punch curvature refers to a curvature of a punch leading end used for the pressing. An increase in the punch curvature will also increase the local curvature applied to the steel sheet at the time of 3-point bending press, having an influence on the out-of-roundness of the steel pipe after the pipe expanding step. However, since it is difficult to change the punch curvature for each pressing when forming one steel sheet, it is preferable to use the punch curvature set according to the size of the steel pipe to be formed, as the operational parameter of the press bending step.

### <Seam gap reduction step>

The seam gap reduction step is a step of reducing the seam gap of formed body having a U-shaped cross section, formed by the press bending step, and applying a bending force and a compressive force so as to bring the ends of the U-shaped cross section formed body close to each other. At this time, even with the bending force or a compressive force applied to the formed body of a U-shaped cross section, the seam gap would be widened due to spring back at the time of unloading. Therefore, taking the occurrence of spring back into account, a strong bending force or a compressive force is applied, so as to apply deformation to crush the U-shaped cross section of the formed body in the longitudinal direction as a whole.

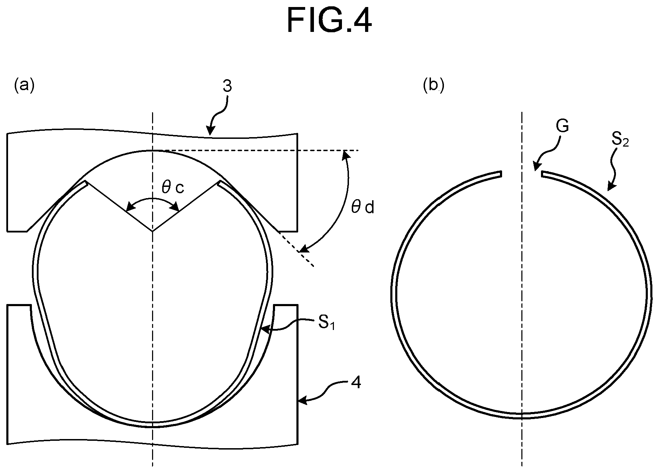

FIG. 4 illustrates a configuration example of an O-press device typically used as a seam gap reduction step. As illustrated in FIG. 4(a), using an upper die 3 and a lower die 4, the O-press device applies compressive deformation in the longitudinal direction of the formed body S₁ having a U-shaped cross section. At this time, the surfaces of the upper die 3 and the lower die 4 in contact with the formed body S₁ having a U-shaped cross section are worked into a curved surface shape. By bringing the upper die 3 and the lower die 4 close to each other, the lower portion of the formed body S₁ having a U-shaped cross section is restrained along the curved surface of the lower die 4**.** The upper portion of the formed body S₁ including the end receives the bending force and the compressive force by the upper die 3, so as to bring the ends close to each other along the curved surface of the upper die 3.

This temporarily reduces the seam gap between the ends facing each other in the circumferential direction. Thereafter, by releasing the pushing by the die, the seam gap is expanded by the spring back, and the final opening amount of a seam gap portion G of an open pipe S₂ illustrated in FIG. 4(b) is determined. At this time, the O-press depression amount is a value obtained by subtracting the distance between an uppermost point of an inscribed surface of the upper die 3 and a lowermost point of an inscribed surface of the lower die 4 at the time of pushing the die from the target outer diameter of the steel pipe. In addition, the press depression amount is also referred to as an O-press reduction ratio, using a ratio of the O-press depression amount to the outer diameter of the steel pipe.

Here, examples of the operational parameters for specifying the operational conditions of the seam gap reduction step include an O-press depression position, an O-press die R, and the like in addition to the O-press depression amount.

The O-press depression position refers to an angle formed by a vertical line and a line connecting the end of the seam gap portion of the formed body S₁ having a U-shaped cross section and the center position of the formed body S₁ in the width direction. Furthermore, the O-press die R refers to a curvature of a region of the upper die 3 and the lower die 4 in contact with the formed body S₁. Here, the greater the O-press depression amount in the O-press device, the greater the curvature of the formed body S₁ around three o'clock and the nine o'clock, which lowers the final out-of-roundness of the steel pipe.

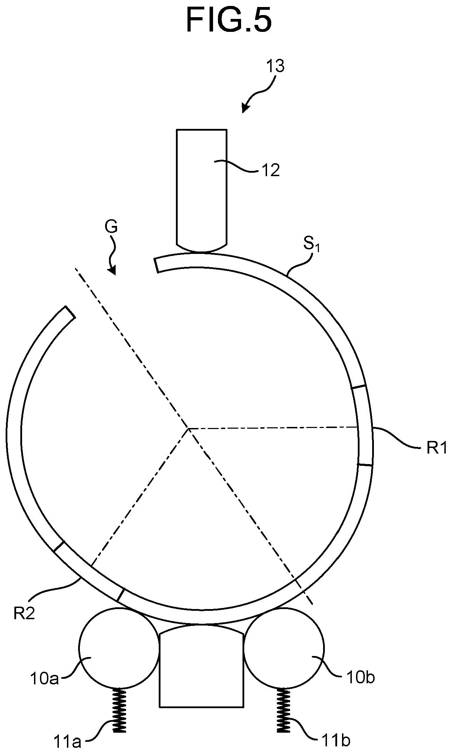

On the other hand, when the closing press method is used instead of the O-press device, the closing press device illustrated in FIG. 5 is used as a device for forming the open pipe S₂ from the formed body S₁. As illustrated in FIG. 5, the closing press device includes lower tools 10a and 10b. The lower tools 10a and 10b are provided at intervals from each other, and each include a drive mechanism capable of reversing the rotation direction. In addition, the lower tools 10a and 10b are supported via spring means 11a and 11b and the like. An upper tool 13 including a punch 12 is disposed so as to face the lower tools 10a and 10b. A pushing force is applied to the formed body S₁ having a U-shaped cross section from the outside through the punch 12.

At this time, the formed body S₁ having a U-shaped cross section is formed into the open pipe S₂ through two steps. In the first step, the press position of the formed body S₁ is positioned via the rotatable lower tools 10a and 10b such that a region R1, which is located on the right side of the seam gap portion G and a target region of application of bending deformation, is positioned in the vicinity of three o'clock, as schematically illustrated by a one-dot chain line. Subsequently, a pushing force is applied by the punch 12, and unloading of the punch 12 is performed after application of the pushing force. Next, similar to the first step, operation of a second step is performed in which the press position is positioned so that the region R2, located on the left side of the seam gap portion G and a target region of application of bending deformation, is positioned in the vicinity of nine o'clock. Thereafter, a pushing force is applied by the punch 12, and unloading of the punch 12 is performed after application of the pushing force, whereby the formed body S₁ is formed into the open pipe S₂.

Here, the press position in the first and second steps is indicated by an angle of a line connecting the center of the seam gap portion G and the center position of the steel sheet in the width direction (an angle formed by the one-dot chain line and the vertical line in FIG. 5). The pushing force in the first and second steps refers to a pressing force applied to the formed body S₁ by the punch 12.

### <Welding step>

Thereafter, the end surfaces of the seam gap portions of the open pipe S₂ are butted against each other and welded by a welding machine (joining means) to form a steel pipe. The welding machine (joining means) to be used is, for example, a device including three types of welding machines, that is, a tack welding machine, an inner surface welding machine, and an outer surface welding machine. In these welding machines, the tack welding machine brings the surfaces butted by the cage rolls into close contact with each other continuously in an appropriate positional relationship, and welds the close contact portion over the entire length in the pipe axis direction. Next, the tacked pipe is welded (submerged arc welding) from the inner surface of the butt portion by an inner surface welding machine, and further welded (submerged arc welding) from the outer surface of the butt portion by an outer surface welding machine.

### <Pipe expanding step>

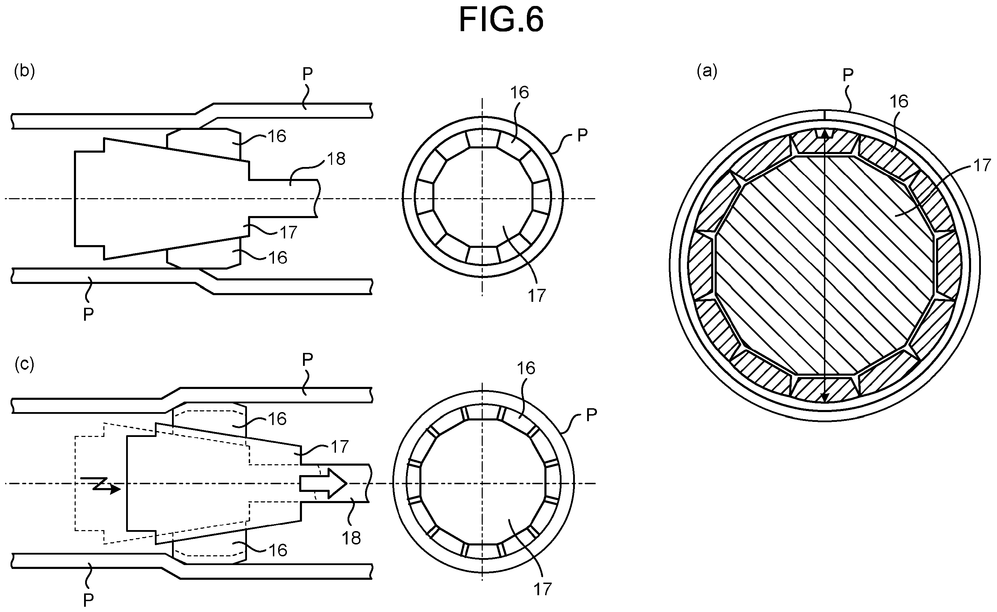

The steel pipe having the seam gap portion welded is processed such that a pipe expanding device is inserted into the steel pipe to expand the diameter of the steel pipe (referred to as pipe expansion). FIGS. 6(a) to 6(c) are diagrams illustrating a configuration example of the pipe expanding device. As illustrated in FIG. 6(a), the pipe expanding device includes a plurality of pipe expanding dies 16 having curved surfaces obtained by dividing an arc into a plurality of arcs along the circumferential direction of a tapered outer circumferential surface 17. When expanding the steel pipe using the pipe expanding device, as illustrated in FIGS. 6(b) and 6(c), the pipe expanding die 16 is first aligned with a pipe expanding start position by moving the steel pipe P using a steel pipe moving device. Then, by retracting a pull rod 18 from the pipe expanding start position, first pipe expanding processing is performed.

This allows each of the pipe expanding dies 16 in sliding contact with the tapered outer circumferential surface 17 to be displaced in the radial direction by a wedge action, expanding the steel pipe P. This reduces the level of irregularity in the cross-sectional shape of the steel pipe P, bringing the cross-sectional shape of the steel pipe P closer to a perfect circular shape. Next, the pull rod 18 is advanced to the pipe expanding start position to return the pipe expanding dies 16 to the inside in the vertical axial direction by a release mechanism, and then the steel pipe P is further moved by an amount corresponding to the pitch (axial length) of the pipe expanding dies 16. The pipe expanding dies 16 are adjusted to new pipe expanding positions, and then the above operation is repeated. This makes it possible to perform the first pipe expanding processing over the entire length of the steel pipe P by the pitch of the pipe expanding dies 16.

At this time, examples of the operational parameters for determining the operational conditions of the pipe expanding step include the pipe expansion rate, the number of pipe expanding dies, and the diameter of the pipe expanding dies. The pipe expansion rate refers to a ratio of a difference between an outer diameter after pipe expansion and an outer diameter before pipe expansion to an outer diameter before pipe expansion. The outer diameter before and after pipe expansion can be calculated by measuring the circumferential length of the steel pipe. The pipe expansion rate can be adjusted by a stroke amount when the pipe expanding dies are expanded in a radial direction. The number of pipe expanding dies refers to the number of dies that abut on the steel pipe disposed in the circumferential direction when pipe expansion is performed. The pipe expanding die diameter refers to a curvature of a portion of each pipe expanding die that abuts on the steel pipe.

Among these, the operational parameter that can easily adjust the out-of-roundness after the pipe expanding step is the pipe expansion rate. An increase in the pipe expansion rate will apply the curvature of the region in contact with the pipe expanding die over the entire circumference uniformly onto the pipe according to the pipe expanding dies R, leading to improvement of the out-of-roundness. At this time, the greater the number of pipe expanding dies, the more the local variation in curvature in the circumferential direction of the steel pipe can be suppressed, making it possible to achieve satisfactory out-of-roundness of the steel pipe after the pipe expanding step.

On the other hand, however, an excessive large pipe expansion rate might lower the compressive yield strength of the steel pipe product due to the Bauschinger effect. When a steel pipe is used as a line pipe or the like, high compressive stress acts in the pipe circumferential direction. Therefore, high compressive yield strength is required as a material of the steel pipe, and it is not appropriate to increase the pipe expansion rate more than necessary. Consequently, the pipe expansion rate in actual operation is set such that the out-of-roundness of the steel pipe falls within a predetermined value at a pipe expansion rate lower than the preset upper limit value of the pipe expansion rate.

### <Out-of-roundness measurement step>

In an inspection step as the last manufacturing step of the steel pipe, the quality of the steel pipe is inspected, and the out-of-roundness of the steel pipe is measured. The out-of-roundness measured in the out-of-roundness measurement step is an index representing the degree of deviation of the outer diameter shape of the steel pipe from the perfect circle. Usually, the closer the out-of-roundness is to zero, the closer the cross-sectional shape of the steel pipe is to a perfect circle. The out-of-roundness is calculated based on the outer diameter information of the steel pipe measured by the out-of-roundness measurement device. For example, the tube is equally divided in the circumferential direction at a certain tube length position and the outer diameters at the opposing positions are measured. When the maximum diameter and the minimum diameter among them are defined as Dmax and Dmin, respectively, the out-of-roundness can be defined as Dmax-Dmin. At this time, as more the number of divisions into equal parts, the more the small irregularities in the steel pipe after the pipe expanding step can be a numerical index, which is preferable. Specifically, it is preferable to use information divided into 4 to 36000 equal parts. It is more preferable to use equal parts of 360 or more.

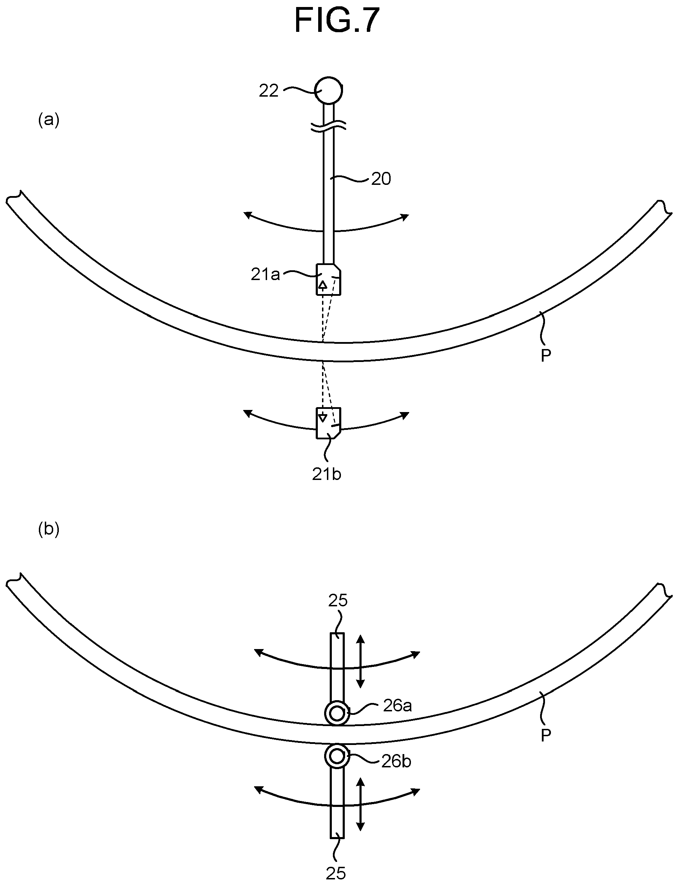

However, the out-of-roundness does not necessarily have to be represented by the difference between the maximum diameter and the minimum diameter. It is also allowable to use a method of calculating an equivalent temporary perfect circle (diameter) having the same area as the area inside the curve of a figure representing the outer diameter shape of the steel pipe in a continuous diagram and defining a region deviated from the outer diameter shape of the steel pipe as an image based on the temporary perfect circle. As a means of measuring the outer diameter shape of the steel pipe, for example, the following methods can be used.
(a) As illustrated in FIG. 7(a), using a device including an arm 20 rotatable by 360 degrees about a substantially central axis of the steel pipe P, displacement gauges 21a and 21b attached to the distal end of the arm 20, and a rotation angle detector 22 that detects the rotation angle of the rotation shaft of the arm 20, a distance between the rotation center of the arm 20 and a measurement point on the outer circumference of the steel pipe P is measured with the displacement gauges 21a and 21b for each unit of minute angle of rotation of the arm 20, and then the outer diameter shape of the steel pipe P is specified based on the measured value.
(b) As illustrated in FIG. 7(b), using a device including a rotating arm 25 that rotates about the central axis of the steel pipe P, a frame (not illustrated) that is provided on the end side of the rotating arm 25 so as to be movable in the radial direction of the steel pipe P, a pair of pressing rollers 26a and 26b that comes into contact with the outer surface and the inner surface of the end of the steel pipe P and rotates with the rotation of the rotating arm 25, and a pair of pressing air cylinders fixed to the frame that presses the pressing rollers 26a and 26b against the outer surface and the inner surface of the steel pipe P, the outer diameter shape of the steel pipe P is specified based on the amount of movement in the radial direction of the frame and the pressing positions of the pressing rollers 26a and 26b by the individual pressing air cylinders.

Here, in the present embodiment, by comparing an out-of-roundness prediction result obtained by the out-of-roundness prediction model to be described below with the measured value of the out-of-roundness obtained in the inspection step described above, it is possible to verify the out-of-roundness prediction accuracy. Therefore, with respect to the prediction result of the out-of-roundness prediction model to be described below, it is also possible to improve the prediction accuracy by adding the actual value of the prediction error to the prediction result of the out-of-roundness prediction model.

### [Steel pipe out-of-roundness prediction model generation device]

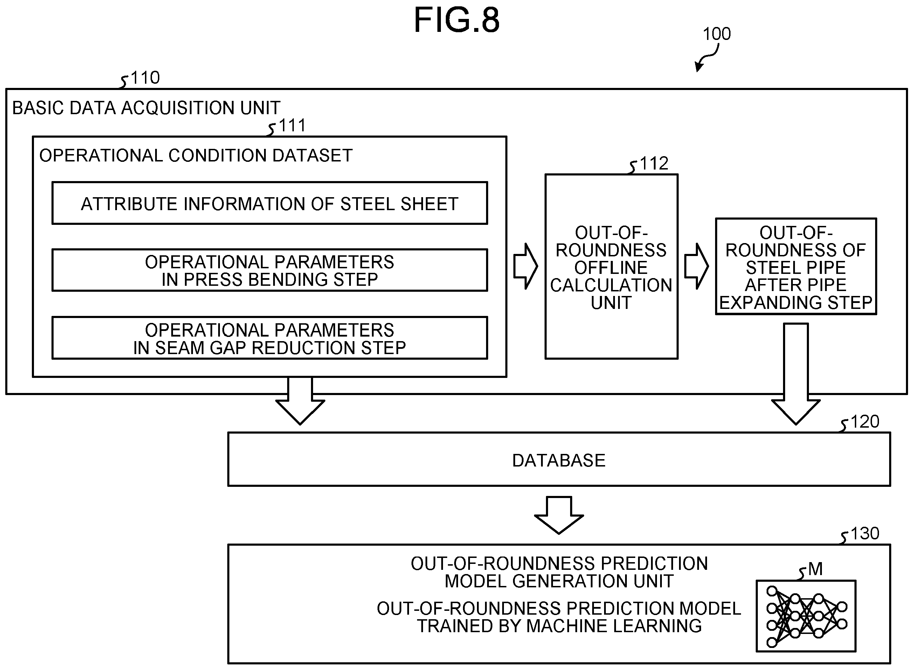

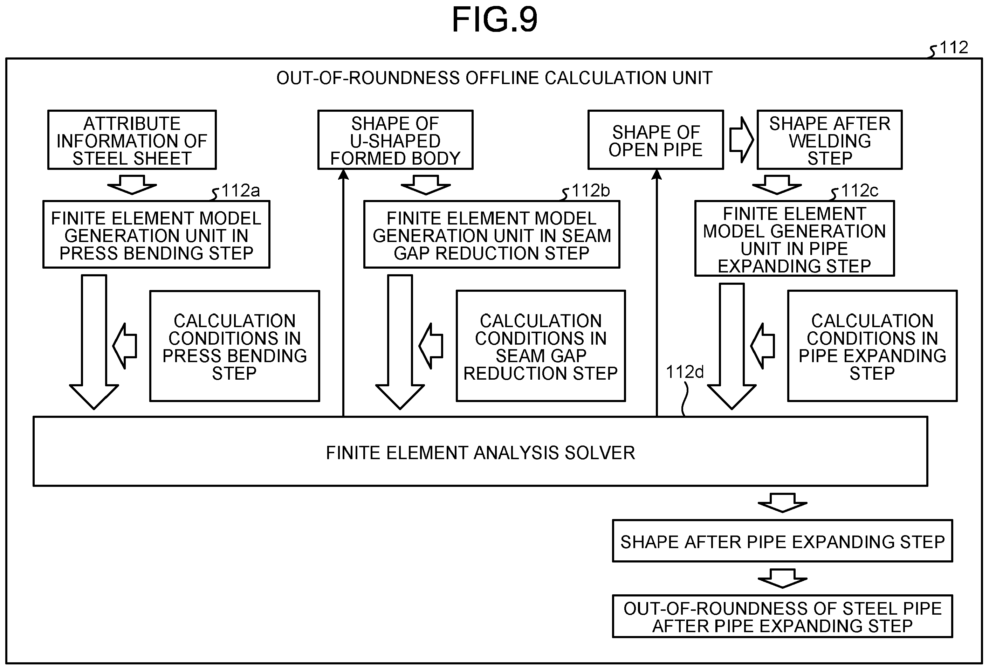

FIG. 8 is a block diagram illustrating a configuration of a steel pipe out-of-roundness prediction model generation device according to an embodiment of the present invention. FIG. 9 is a block diagram illustrating a configuration of an out-of-roundness offline calculation unit 112 illustrated in FIG. 8.

As illustrated in FIG. 8, a steel pipe out-of-roundness prediction model generation device 100 according to an embodiment of the present invention includes an information processing device such as a workstation, and includes a basic data acquisition unit 110, a database 120, and an out-of-roundness prediction model generation unit 130.

The basic data acquisition unit 110 includes an operational condition dataset 111 obtained by quantifying factors having an influence on the out-of-roundness of the steel pipe through the press bending step, the seam gap reduction step, the welding step, and the pipe expanding step; and an out-of-roundness offline calculation unit 112 that outputs the out-of-roundness after the pipe expanding step using the operational condition dataset 111 as an input condition.

In the present embodiment, the operational condition dataset 111 includes at least attribute information regarding a steel sheet to be a material, an operational parameter of the press bending step, and an operational parameter of the seam gap reduction step. This is because these information have a large influence on the out-of-roundness of the steel pipe after the pipe expanding step, and are factors having an influence on the variation in the out-of-roundness. However, other operational parameters of the welding step and the pipe expanding step may be included. Data used for the operational condition dataset 111 will be described below.

The basic data acquisition unit 110 executes numerical operation by the out-of-roundness offline calculation unit 112 while variously changing the parameters included in the operational condition dataset 111, thereby calculating the out-of-roundness of the steel pipe after the pipe expanding step corresponding to the plurality of operational condition datasets 111. The range of changing the parameter included in the operational condition dataset 111 is determined based on a range that can be changed as a normal operational condition according to the size of the steel pipe to be manufactured, the specification of the facility of each step, and the like.

The out-of-roundness offline calculation unit 112 calculates the shape of the steel pipe after the pipe expanding step by numerical analysis through a series of manufacturing steps from the press bending step to the pipe expanding step, and obtains the out-of-roundness of the steel pipe from the shape after the pipe expanding step. Here, the series of manufacturing steps includes the press bending step, the seam gap reduction step, and the pipe expanding step. As illustrated in FIG. 9, the out-of-roundness offline calculation unit 112 includes: finite element model generation units 112a to 112c corresponding to the respective steps; and a finite element analysis solver 112d. Note that the out-of-roundness offline calculation unit 112 may include a finite element model generation unit corresponding to the end bending step.

In a case where the finite element model generation unit corresponding to the end bending step is included in the out-of-roundness offline calculation unit 112, the finite element model generation unit of the end bending step performs element division of the inside of the steel sheet based on the attribute information of the steel sheet. The element division is automatically performed based on a preset element division condition. The finite element model of the end bending step that has undergone the element division is transferred to the finite element analysis solver 112d together with the calculation conditions in the end bending step. The calculation conditions in the end bending step include operational parameters of the end bending step, and also include all information necessary for executing finite element analysis specifying all boundary conditions such as physical property values of a workpiece, a tool, and the like, geometric boundary conditions, and mechanical boundary conditions. The shape of the steel sheet and stress-strain distribution obtained by the finite element analysis in the end bending step are transferred to the finite element model generation unit 112a in the press bending step as initial conditions related to the workpiece in the press bending step.

The finite element analysis solver 112d can be obtained as a variety of commercially available general-purpose analysis software, and thus it is possible to appropriately select and incorporate some of these for effective application. Alternatively, it is also allowable to use a mode in which the finite element analysis solver 112d is mounted on a computer separate from the out-of-roundness offline calculation unit 112, and input data including a finite element model and output data as a calculation result are transmitted to and received from the out-of-roundness offline calculation unit 112. This is because once a finite element model corresponding to each step is generated, numerical analysis can be performed by a single finite element analysis solver.

The finite element method is a type of approximate solution method of dividing a continuous body into finite elements. While being the approximate solution, the finite element method is a method to obtain a solution that satisfies the balance of forces and the continuity of displacement at the node points of the elements, making it possible to obtain a highly accurate solution even with non-uniform deformation. In the finite element method, stress, strain, and displacement in an element are independently defined for each element, and are associated with displacement (velocity) of a node so as to be formulated as a problem of solving simultaneous equations. In a widely used method, the strain (increment) or stress is evaluated by using displacement (speed) at a node of an element as an unknown value at this time.

In addition, the finite element method is characterized in that calculation is performed based on the principle of virtual work expressed in an integral form with respect to an equilibrium condition of stress in an element. The accuracy of the analysis result varies depending on conditions such as element division. In addition, the calculation time required for the analysis is usually long. Still, the finite element method is characterized by its capability of obtaining a solution even for a problem difficult to solve by other methods, as a solution that satisfies a basic equation of plastic mechanics in a node or an element. Therefore, even with a complicated forming history in the manufacturing step of the steel pipe, it is possible to obtain solutions of the displacement, stress field, and strain field of the workpiece close to the actual phenomenon.

A part of the finite element analysis solver may be replaced with various numerical analysis methods or approximate solutions such as a slip line field theory or an energy method. This makes it possible to shorten the overall calculation time. In addition, the finite element analysis used in the present embodiment executes elastoplastic analysis and does not include analysis of a temperature field such as heat conduction analysis. However, when the working speed is high and the temperature rise of the workpiece is large due to working heat generation, it is allowable to perform an analysis combining the heat conduction analysis and the elastoplastic analysis. In addition, the elastoplastic analysis of the present embodiment is a cross-sectional two-dimensional analysis in any case of the press bending step, the seam gap reduction step, and the pipe expanding step, and it is sufficient to perform numerical analysis on a U-shaped cross section, a cross section of the stationary portion in the longitudinal direction when the steel sheet is formed into an open pipe, and a steel pipe. For high accuracy prediction of the shape of the nonstationary portion such as the leading end and the trailing end of the steel pipe, it is preferable to have a finite element model generation unit that performs three-dimensional analysis including the leading end and the trailing end.

Attribute information of a steel sheet, which is a workpiece in the press bending step, is given as input data. At this time, when the end bending step is included as a preceding step of the press bending step, the shape and stress/strain distribution of the obtained steel sheet obtained as a result of performing finite element analysis of the end bending step will be initial conditions for the workpiece in the press bending step. Here, the finite element model generation unit 112a in the press bending step performs element division inside the steel sheet based on the dimension and shape of the steel sheet before the press bending step. The element division is automatically performed based on a preset element division condition. At this time, the distribution of stress and strain remaining inside may be allocated to each element based on the manufacturing history applied to the steel sheet in the preceding step. This is because, in the press bending step mainly including bending processing, the initial residual stress also has an influence on the shape of the U-shaped formed body of the processed steel sheet.

Together with the finite element model of the press bending step generated in this manner, the calculation condition in the press bending step is transferred as input data to the finite element analysis solver 112d. At this time, the calculation conditions in the press bending step are supposed to include operational parameters of the press bending step, and supposed to include all information necessary for executing finite element analysis specifying all boundary conditions such as physical property values of a workpiece, a tool, and the like, geometric boundary conditions, and mechanical boundary conditions.

The finite element analysis solver 112d performs numerical analysis under the calculation conditions given as above to obtain the shape of the U-shaped formed body and the distribution of stress and strain remaining inside after the press bending step. The result calculated in this manner is used as input data for the next seam gap reduction step in the out-of-roundness offline calculation unit 112. Based on the calculated shape after the press bending step, the finite element model generation unit 112b of the seam gap reduction step performs element division within the U-shaped formed body. The element division is automatically performed based on a preset element division condition. At this time, it is preferable to assign the distribution of stress and strain calculated for the preceding step to each element. This is because of the reason similar to the description above.

Together with the finite element model of the seam gap reduction step generated in this manner, the calculation conditions in the seam gap reduction step are transferred as input data to the finite element analysis solver 112d. At this time, the calculation conditions in the seam gap reduction step are supposed to include operational parameters of the seam gap reduction step, and supposed to include all information necessary for executing finite element analysis specifying all boundary conditions such as physical property values of a workpiece, a tool, and the like, geometric boundary conditions, and mechanical boundary conditions.

The finite element analysis solver 112d performs numerical analysis under the calculation conditions given as above to obtain the shape of the open pipe and the distribution of residual stress and strain inside after the seam gap reduction step. The result calculated in this manner is used for input data in the finite element model generation unit 112c of the next step, namely, the pipe expanding step. At this time, also in the welding step of welding the seam gap portion of the open pipe, the residual stress and strain generated in the steel pipe after welding may be obtained by numerical analysis of the welding step.

However, it is difficult, in many cases, to perform precise numerical analysis on the welding step due to the reasons such as the thermal conduction behavior accompanying the melting of the steel sheet at the time of welding, and the influence on the mechanical properties of the heat-affected zone. In addition, the heat-affected zone due to welding only affects the shape of a part of the steel pipe, and has a small influence on the shape of the entire steel pipe. Therefore, it is allowable to ignore the influence of the heat-affected zone of the steel sheet in the welding step on the out-of-roundness of the steel pipe after the pipe expanding step.

The welding step performs the welding while restraining the open pipe from the outside so as to reduce the seam gap of the open pipe, which changes the stress and strain distribution due to elastic deformation change in a portion other than the vicinity of the seam gap portion. Therefore, using the finite element analysis solver 112d, numerical analysis can be performed for the behavior of restraining the seam gap of the open pipe from the surroundings so as to set the seam gap of the open pipe to zero by the finite element method, and the result can be set to the stress-strain state after the welding step.

Meanwhile, when the step of reducing the seam gap in such a welding step corresponds to elastic deformation, the stress/strain distribution after the welding step may be obtained by superimposing an analytical solution of stress and strain on the curved beam according to the beam theory on the distribution of stress and strain in the open pipe calculated by finite element analysis. This makes it possible to shorten the calculation time.

Based on the shape of the steel pipe after the welding step obtained as described above, the finite element model generation unit 112c in the pipe expanding step performs element division inside the steel pipe. The element division is automatically performed based on a preset element division condition. At this time, it is preferable to assign the distribution of stress and strain calculated as described above to each element. The generated finite element model of the pipe expanding step is transferred to the finite element analysis solver 112d together with the calculation conditions in the pipe expanding step. The calculation conditions in the pipe expanding step are supposed to include operational parameters of the pipe expanding step according to the present embodiment, and supposed to also include all information necessary for executing finite element analysis specifying all boundary conditions such as physical property values of a workpiece, a tool, and the like, geometric boundary conditions, and mechanical boundary conditions.

The finite element analysis solver 112d performs numerical analysis under the calculation conditions given as above to obtain the shape of the steel pipe and the distribution of internal stress and strain after the pipe expanding step. The calculated shape of the steel pipe has a non-uniform curvature distribution in the circumferential direction, and the out-of-roundness of the steel pipe is obtained according to the definition of the out-of-roundness in the out-of-roundness measurement step. The numerical analysis using the finite element method by the out-of-roundness offline calculation unit 112 sometimes requires a calculation time of about 1 to 10 hours for one operational condition dataset (single case).

However, since the processing is executed offline, there is no constraint on the calculation time. In order to shorten the calculation time for a large number of operational condition datasets, numerical operation corresponding to a plurality of operational condition datasets may be executed in parallel using a plurality of computers. This makes it possible to build a database for generating an out-of-roundness prediction model in a short period of time. Furthermore, in recent years, the calculation time per case is about 1/2 to 1/10 of the conventional calculation time by calculation using a General-Purpose computing on Graphics Processing Unit (GPGPU), and such a computer tool may be used.

The description returns to FIG. 8. The database 120 stores the operational condition dataset 111 and its corresponding data related to the out-of-roundness of the steel pipe after the pipe expanding step. The data stored in the database 120 can be obtained offline. Unlike the database accumulated as the actual value of the actual operation, the operational condition dataset can be flexibly set, making it a database suitable for machine learning with less likelihood of occurrence of statistical bias in the operational condition of the operational condition dataset. In addition, since calculation results obtained by precise numerical analysis are accumulated, with no accumulation of training data fluctuating over time, the more the data is accumulated, the more the useful database can be obtained.

The out-of-roundness prediction model generation unit 130 generates an out-of-roundness prediction model M trained by machine learning to obtain the out-of-roundness of a steel pipe after the pipe expanding step for the input operational condition dataset 111 based on a relationship between the plurality of sets of operational condition datasets 111 and the out-of-roundness of the steel pipe stored in the database 120. Incidentally, the relationship between the operational conditions in each step and the out-of-roundness of the steel pipe after the pipe expanding step may exhibit complicated nonlinearity. Therefore, while modeling assuming a linearity would result in prediction with low accuracy, the machine learning method using a function having nonlinearity, such as a neural network, will be able to perform prediction with high accuracy. Here, modeling means replacing an input/output relationship in numerical operation with an equivalent functional form.

The number of databases required to generate the out-of-roundness prediction model M is desirably 500 or more pieces of data, although it varies depending on conditions such as the size of the steel pipe to be manufactured. Preferably, 2000 or more pieces of data and more preferably 5000 or more pieces of data are to be used. The method of machine learning may be a known learning method. The machine learning may be implemented by using, for example, a known machine learning method such as a neural network. Examples of other methods include decision tree learning, random forest, Gaussian process regression, support vector regression, and k-nearest neighbor algorithm. While the out-of-roundness prediction model M is generated offline, the out-of-roundness prediction model generation unit 130 may be incorporated in an online control system, and the out-of-roundness prediction model may be periodically updated using a database calculated and accumulated offline as needed.

The out-of-roundness prediction model M for the steel pipe after the pipe expanding step generated as described above has the following characteristics. That is, as the attribute information of the steel sheet to be a material, for example, the yield stress, the sheet thickness, and the like has a certain level of variation in manufacturing the steel sheet, and this will have an influence on the curvature of the steel sheet and the curvature after unloading at the time of punch pushing in the 3-point bending press in the press bending step. Therefore, by selecting the attribute information of these steel sheets as input parameters of the out-of-roundness prediction model M generated offline, it is possible to predict the influence of the attribute information such as the yield stress and the sheet thickness of the material on the out-of-roundness of the steel pipe after the pipe expanding step. In addition, the seam gap reduction step is a step of applying a bending force and a compressive force using a die or the like as well, and changes the curvature of the steel sheet after unloading depending on the yield stress, the sheet thickness, and the like, and thus, the information is to be used as input parameters of the out-of-roundness prediction model M.

Furthermore, since the press bending step is a step of applying a discontinuous curvature application processing a plurality of times in the width direction of the steel sheet, a local curvature distribution is generated in the steel sheet in the sheet width direction. Thereafter, when combined deformation of compression and bending is applied as in the seam gap reduction step, the bending moment applied in the seam gap reduction step is locally distributed according to the local curvature distribution of the steel sheet applied in the press bending step, similarly to the case where the bending moment acting on the beam referred to as "curved beam" changes depending on the curvature of the beam before deformation. This causes the operational conditions of the press bending step to have an influence on the curvature distribution in the width direction of the steel sheet after the seam gap reduction step. In this respect, there is a significance of using both the operational parameters of the press bending step and the seam gap reduction step as input parameters for the out-of-roundness prediction model M.

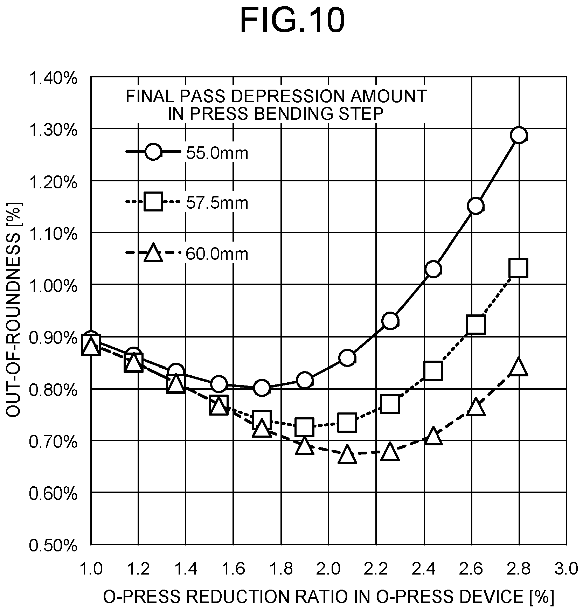

For example, FIG. 10 illustrates a result of measuring the out-of-roundness of a steel pipe after the pipe expanding step (the operational conditions of the pipe expanding step are the same) while changing the O-press reduction ratio using an O-press device as the seam gap reduction step under the condition that the number of times of pressing is set to nine in the press bending step in manufacturing a steel pipe having an outer diameter of 30 inches and a pipe thickness of 44.5 mm. FIG. 10 illustrates a result of changing the press depression amount (final pass depression amount) at the time of the last (ninth) pressing by three levels while using the same settings in the other operational conditions in the press bending step.

As illustrated in FIG. 10, the O-press reduction ratio representing the press working amount in the seam gap reduction step has an optimum value for reducing the out-of-roundness of the steel pipe after the pipe expanding step, and it can be seen that the optimum value changes depending on the final press depression amount in the press bending step which is the operational condition of the press bending step. That is, it is obvious that, in order to reduce the out-of-roundness of the steel pipe after the pipe expanding step, there is a need to change the operational conditions of the seam gap reduction step according to the operational conditions of the press bending step, it is not always possible to set appropriate operational conditions only by focusing on the point that the operational conditions of the press bending step and the seam gap reduction step have an influence on the out-of-roundness of the steel pipe after the pipe expanding step as independent parameters.

In this regard, the out-of-roundness prediction model of the present embodiment can consider the influence of such operational parameters of a plurality of manufacturing steps on the out-of-roundness of the steel pipe after the pipe expanding step, making it possible to predict the out-of-roundness with high accuracy. In addition, since the out-of-roundness prediction model trained by machine learning is generated, it is possible to immediately calculate the out-of-roundness to be output even when the variable to be input condition is changed, which lead to a feature of capability to immediately set and correct the operational conditions even in the case of using online. Hereinafter, each parameter used for input for the out-of-roundness prediction model will be described.

### <Attribute information of steel sheet>

The applicable attribute information of the steel sheet to be a material can be any parameter having an influence on the out-of-roundness of the steel pipe after the pipe expanding step, such as yield stress of the steel sheet, tensile strength, modulus of longitudinal elasticity, sheet thickness, sheet thickness distribution in the sheet plane, yield stress distribution in the sheet thickness direction of the steel sheet, the degree of the Bauschinger effect, and surface roughness. In particular, it is preferable to use, as an index, a factor having an influence on the deformation state and spring back of the steel sheet by the 3-point bending press in the press bending step, and a factor having an influence on the deformation state and spring back of the steel sheet by compression/bending processing in the seam gap reduction step.

The yield stress of the steel sheet, the distribution of the yield stress in the sheet thickness direction of the steel sheet, and the sheet thickness have a direct influence on the state of stress and strain in the 3-point bending press. The tensile strength is a parameter reflecting the state of work hardening in bending processing, and has an influence on the stress state during bending deformation. The Bauschinger effect has an influence on the yield stress and the subsequent work hardening behavior when the loading due to bending deformation is reversed, and influence on the stress state during bending deformation. In addition, the modulus of longitudinal elasticity of the steel sheet has an influence on the spring back behavior after the bending processing. Furthermore, the sheet thickness distribution in the sheet plane generates the distribution of the bending curvature in the press bending step, and the surface roughness has an influence on the frictional state between the die and the steel sheet in the seam gap reduction step, leading to an influence on the out-of-roundness of the steel pipe after the pipe expanding step.

Among these pieces of attribute information, it is particularly preferable to use the yield stress, the representative sheet thickness, the sheet thickness distribution information, and the representative sheet width. These items, which are information measured in a quality inspection step of a thick sheet rolling step which is a step of manufacturing a steel sheet to be a material, have an influence on deformation behavior in a press bending step and a seam gap reduction step as well as having an influence on out-of-roundness of a steel pipe after a pipe expanding step, and thus are to be preferably used as attribute information of the steel sheet in the basic data acquisition unit 110.

The yield stress is information that can be obtained from a tensile test of a small test piece for quality assurance collected from a thick steel sheet to be a material, and may be a representative value in a plane of the steel sheet to be a material. In addition, the representative sheet thickness is a sheet thickness representing a sheet thickness in a plane of a steel sheet to be a material, and may be a sheet thickness of a central portion in a width direction of the steel sheet at an arbitrary position in a longitudinal direction of the steel sheet may be used, or an average value of sheet thicknesses in the longitudinal direction. Furthermore, an average value of the sheet thicknesses of the entire in-plane sheet of the steel sheet may be obtained and used as the representative sheet thickness.

In addition, the sheet thickness distribution information refers to information representing the sheet thickness distribution in the width direction of the steel sheet. A typical example is a crown occurring in a steel sheet. The crown represents a difference in the sheet thickness between a central portion of the steel sheet in the width direction, and a position away from the end of the steel sheet in the width direction by a predetermined distance (for example, 100 mm, 150 mm, or the like). The representative sheet width is a representative value regarding the width of the steel sheet as a material. There is a case where there is a variation in the width of the thick steel sheet to be a material or the width of the steel sheet varies when the end of the steel sheet in the width direction is ground by beveling, which will influence the variation in the outer diameter accuracy of the steel pipe to be a product.

The attribute information of the steel sheet described above is information used to set operational conditions in the manufacturing step of the steel pipe, as information collected by the host computer in the online operation. The basic data acquisition unit 110 may select, from among the pieces of information, appropriate information that matches the attribute information of the steel sheets collected by the online host computer.

### <Operational parameters in end bending step>

When the operational parameters of the end bending step are used for input of the out-of-roundness prediction model, a parameter for specifying the shape formed by the forming surface 33a of the upper die 33 and the shape formed by the pressing surface 34a of the lower die 34 used in the C-press device 30 can be used as the operational parameter. In addition, it is also allowable to use an end bending processing width (width subjected to end bending forming), a push-up force (C-press force), and a gripping force of the clamp mechanism 37 in the end bending step, as operational parameters. This is because these items are factors having an influence on the deformation of the end of the steel sheet in the width direction in the end bending step. When three-dimensional deformation analysis is performed for the end bending step, the feed amount, the feed direction, and the number of times of feeding of the steel sheet may be used as the operational parameters for the end bending step.

Here, there are cases where the shape formed by the forming surface 33a of the upper die 33 is given as a shape having arcs of a plurality of curvature radii provided in a continuous shape or the shape is given by an involute curve or the like, allowing the use of a parameter for specifying a geometric cross-sectional shape. For example, when the cross-sectional shape is formed by a parabolic shape, the cross-sectional shape can be specified by using coefficients of a first-order term and a second-order term of a quadratic expression representing a parabola passing through an origin, and thus such a coefficient can be used as an operational parameter for the end bending step.

In another case where a plurality of dies are held and appropriately exchanged to be used for forming the shape formed by a forming surface 33a of the upper die 33 according to conditions such as the outer diameter, the wall thickness, and the type of the steel pipe to be manufactured, a die management number for specifying a die to be used in the end bending step may be used as the operational parameter for the end bending step.

### <Operational parameters for press bending step>

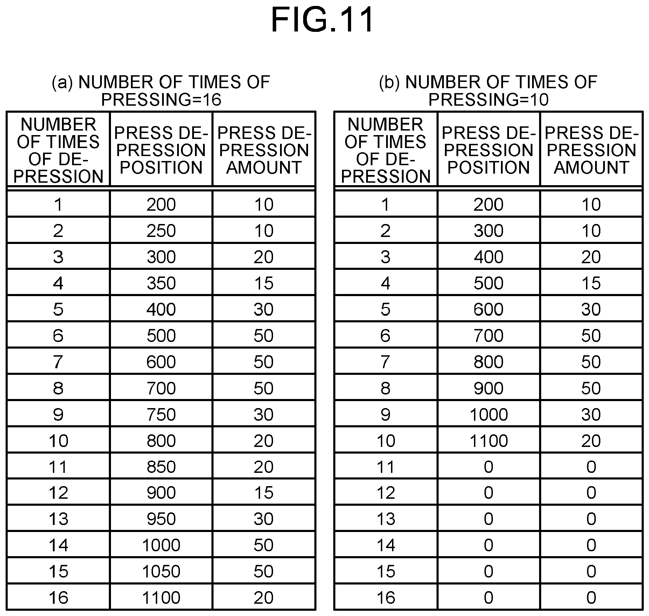

In the present embodiment, the operational parameter for the press bending step is used for the input to the out-of-roundness prediction model. The operational parameters for the press bending step may be various parameters having an influence on the local bending curvatures of the steel sheet and the distribution thereof in the sheet width direction, such as the number of times of pressing of the 3-point bending press, press position information, press depression amount, lower die interval, and punch curvature described above. In particular, it is preferable to use information including all of press position information and the press depression amount in an operation of the punch pressing the steel sheet, and the number of times of pressing performed through the press bending step. The method illustrated in FIG. 11 can be exemplified as a case of including all of these pieces of information.

FIGS. 11(a) and 11(b) each illustrate an example of the press depression position and the press depression amount when the punches are pressed with the number of times of pressing of 16 times/10 times with respect to the steel sheets having the same sheet width. At this time, the press depression position is information indicating a distance from a reference end of the steel sheet in the width direction, and is used as the press depression position information. In addition, the press depression amount is described corresponding to each press depression position, and such "number of times of depression", "press depression position", and "press depression amount" can be integrated as a set of data. In the examples illustrated in FIGS. 11(a) and 11(b), the operational parameters of the press bending step are specified by 16 sets of data and 10 sets of data at the number of times of pressing of 16 times and 10 times, respectively.

In the present embodiment, such a dataset is used as an input of an out-of-roundness prediction model in the following form. For example, as inputs of the out-of-roundness prediction model, it is possible to use a press depression position and a press depression amount when performing press depression at a position closest to the end at one end of the steel sheet, and possible to use a pressing depression position and a press depression amount when performing pressing depression at a position closest to the end at the other end of the steel sheet.

When the press depression amount at one end of the steel sheet is increased in the 3-point bending press, curvatures at portions of the steel pipe in FIG. 2 corresponding to approximately one o'clock and a portion corresponding to approximately eleven o'clock are increased, leading to formation of the formed body having a U-shaped cross section with a horizontally long shape as a whole. In addition, the closer the press depression position is to the end of the steel sheet, the lower the position of the seam gap portion, leading to formation of the formed body having a U-shaped cross section with a horizontally long shape as a whole. As a result, the steel pipe formed into the open pipe and subjected to the welding step and the pipe expanding step will also have a horizontally long shape as a whole, having an influence on the out-of-roundness. Furthermore, the punch curvature at the time of press depression, the total number of times of press depression, and the interval between the lower dies at the time of press depression also has an influence on the out-of-roundness.

Meanwhile, by using, as an input of the out-of-roundness prediction model, all the press depression position information and the data of the press depression amount together with the number of times of pressing, it is possible to further improve the prediction accuracy of the out-of-roundness prediction model. For example, based on the assumed maximum number of times of pressing, data of the press depression position and the press depression amount is stored according to the number of times of pressing in the case of performing pressing. The press depression position and the press depression amount in the subsequent press working with no pressing are set to zero. For example, in an assumed case where the maximum assumable number of times of pressing is 16 times in the examples illustrated in FIGS. 11(a) and 11(b), and when the number of times of pressing is 10 times, the data of the 11 to 16th depression, which is set to zero, will be input to the out-of-roundness prediction model.

The operational parameters of the press bending step described above are information used as operational conditions set by the host computer in online operation. The basic data acquisition unit 110 preferably selects a parameter to be used for the input to the out-of-roundness prediction model from among the operational parameters of the press bending step collected by the online host computer in this manner.

### <Operational parameter of seam gap reduction step >

In the present embodiment, the operational parameters of the seam gap reduction step are used for the input to the out-of-roundness prediction model. When an O-press device is used as the seam gap reduction step, an O-press depression amount, an O-press depression position, and an O-press die R can be used as operational parameters. In another case where the closing press method is used, the closing press depression position and the closing press pushing force in each step described above are used as the operational parameters. When an O-press device is used in particular, it is preferable to use an O-press depression amount. This is because, an increase in the O-press depression amount would lead to a state where a region between the point where the steel pipe receives the restraining and pressing force from the upper die and the point where the steel pipe is restrained by the lower die, mainly in the vicinity of three o'clock and nine o'clock portions of the steel pipe, are not restrained, to which bending and compression deformations are concentrated. This region will have an increased curvature, which has an influence on the final out-of-roundness.

The operational parameters of the seam gap reduction step described above are information used as operational conditions set by the host computer in online operation. The basic data acquisition unit 110 preferably selects a parameter to be used for the input to the out-of-roundness prediction model from among the operational parameters of the seam gap reduction step collected by the online host computer in this manner.

### <Operational parameters of pipe expanding step>

In addition to the operational parameters described above, when the operational parameters of the pipe expanding step are used for the input to the out-of-roundness prediction model, the pipe expansion rate can be used as the operational parameters of the pipe expanding step. Although the greater the pipe expansion rate, the more the out-of-roundness of the steel pipe after the pipe expanding step is improved, the upper limit value of the pipe expansion rate is limited from the viewpoint of the compressive yield strength as a steel pipe product, and therefore, the calculation condition of the basic data acquisition unit 110 is to be determined using a value within the range. At this time, since the pipe expansion rate is information necessary for controlling the pipe expanding device, the pipe expansion rate can be specified by the set value set by a high-order calculator. As the operational parameter of the pipe expanding step, the number of pipe expanding dies and the pipe expanding die diameter may be used in addition to the pipe expansion rate.

### [Out-of-roundness prediction method]

In the present embodiment, the out-of-roundness prediction model M generated offline by the out-of-roundness prediction model generation unit 130 as described above is used to perform online prediction of the out-of-roundness of the steel pipe after the pipe expanding step. An initial procedure of the out-of-roundness prediction of the steel pipe after the pipe expanding step, an operational condition dataset to be set as an operational condition of the steel pipe manufacturing step is acquired online (operational parameter acquisition step). This is a step of acquiring necessary data from the host computer that performs overall control of the steel pipe manufacturing step or from an individual forming processing step control computer, as the operational condition dataset to be the input to the out-of-roundness prediction model generated as described above. Here, the "online" means duration of a series of manufacturing steps from the timing before the start of the manufacturing step of the steel pipe to the completion of the pipe expanding step. Therefore, the processing or working does not necessarily have to be in execution in any of the forming processing steps. The period of waiting for conveying the steel sheet to the next step between each forming processing step is also included in "online". In addition, the period before the start of the manufacturing step of the steel pipe and after the completion of the thick sheet rolling step of manufacturing the steel sheet as a material can also be included in "online". This is because when the thick sheet rolling step of manufacturing a steel sheet to be a material is completed, an operational condition dataset to be an input to the out-of-roundness prediction model of the present embodiment can be acquired. The model used online is the out-of-roundness prediction model M trained in machine learning, and after setting the operational parameter to be the input condition, it is possible to immediately calculate the out-of-roundness to be output and promptly perform reconfiguration of operational conditions, and the like.

The steel pipe out-of-roundness prediction after the pipe expanding step can be performed at any timing before or during the manufacturing step of the steel sheet. The operational condition dataset to be the input to the out-of-roundness prediction model M is appropriately generated according to the timing of performing the prediction. That is, when the steel pipe out-of-roundness prediction after the pipe expanding step is performed before the press bending step, it is possible to use actual values (actual measurement values) for the attribute information of the steel sheet to be the material, and the set value of the operational condition preset in the host computer is used as the operational parameter of the subsequent manufacturing step including the press bending step.

In addition, when the press bending step is finished and the out-of-roundness prediction of the steel pipe after the pipe expanding step is performed before the start of the seam gap reduction step, the actual values (actual measurement values) for the attribute information of the steel sheet to be the material and the actual values of the operational parameters of the press bending step are to be used, and the set values of the operational condition preset by the host computer is to be used as the operational parameters of the subsequent manufacturing step including the seam gap reduction step. Note that the preset set values of the operational conditions are set values that have been set based on the past operational performance and stored in the host computer in advance.

As described above, the present embodiment uses a set of operational condition datasets, acquired according to the timing of predicting the out-of-roundness of the steel pipe after the pipe expanding step, for the input to the out-of-roundness prediction model, and the out-of-roundness of the steel pipe after the pipe expanding step, which is the output, is predicted online. This makes it possible to perform reconfiguration of the operational conditions of the subsequent manufacturing step according to the predicted out-of-roundness of the steel pipe, leading to further reduction of the out-of-roundness of the steel pipe after the pipe expanding step.

### [Out-of-roundness control method]

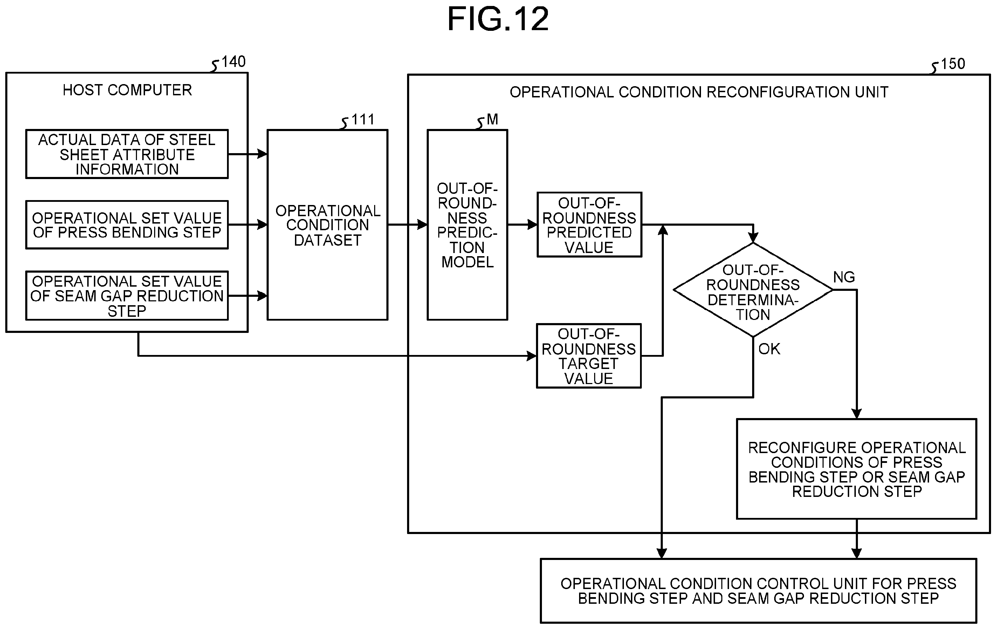

A steel pipe out-of-roundness control method after the pipe expanding step according to the present embodiment will be described. FIG. 12 is a diagram illustrating a flow of processing of predicting out-of-roundness of the steel pipe after the pipe expanding step before the start of the press bending step. As illustrated in FIG. 12, this processing obtains data including: actual data regarding attribute information of the steel sheet to be the material; set values (operational set values) preset as the operational conditions of the press bending step; and the set values (operational set values) preset as the operational conditions of the seam gap reduction step, from the host computer 140, and acquires these pieces of information as the operational condition dataset 111. In addition, an out-of-roundness target value preset as a target out-of-roundness of the steel pipe after the pipe expanding step is transferred from the host computer 140 to an operational condition reconfiguration unit 150.

The out-of-roundness of the steel pipe after the pipe expanding step is predicted using the operational condition dataset 111 acquired in this manner as an input to the out-of-roundness prediction model M. Subsequently, the predicted out-of-roundness (out-of-roundness predicted value) is compared with the target out-of-roundness (out-of-roundness target value), and when the predicted out-of-roundness is smaller than the out-of-roundness target value, the steel pipe is manufactured without changing the set values of the operational conditions of the press bending step, the seam gap reduction step, and the pipe expanding step. In contrast, when the predicted out-of-roundness is larger than the out-of-roundness target value, reconfiguration of the operational condition of the press bending step or the seam gap reduction step is performed.

Specifically, reconfiguration is performed so as to increase the number of times of pressing in the press bending step once or twice or more and shorten the interval between the press depression positions. This improves the out-of-roundness of the steel pipe after the pipe expanding step. Furthermore, the set value of the operational condition of the press bending step reconfigured in this manner may be used again as the input data to the out-of-roundness prediction model M to perform out-of-roundness prediction again, a confirmation may be performed whether the predicted out-of-roundness is smaller than the out-of-roundness target value so as to determine the reconfiguration value of the operational condition of the press bending step.

Next, the reconfigured operational condition of the press bending step is transferred to the operational condition control unit of the press bending step, and the operational conditions of the press bending step are determined. By repeatedly performing the out-of-roundness determination in the operational condition reconfiguration unit 150 a plurality of times, an appropriate operational condition of the press bending step can be set even when an out-of-roundness target value is set to a strict value, making it possible to manufacture a steel pipe with further improvement in the out-of-roundness.

Meanwhile, when the operational parameter of the seam gap reduction step is to be reconfigured, the O-press depression amount is changed. For example, a plurality of O-press depression amount conditions are input to the out-of-roundness prediction model M, and a condition of the O-press depression amount for obtaining the best out-of-roundness is selected from among the conditions to be set. In this manner, the reconfigured operational conditions of the seam gap reduction step are transferred to the operational condition control unit of the seam gap reduction step, and the operational conditions of the seam gap reduction step are determined. Incidentally, reconfiguration may be performed on both the operational parameters of the press bending step and the operational parameters of the seam gap reduction step. The reconfiguration method is similar to the method described above. The more the number of operational parameters to be reconfigured, the more the control range of the out-of-roundness of the steel pipe after the pipe expanding step expands, leading to further reduction of the out-of-roundness.

As described above, the out-of-roundness control method according to the embodiment of the present invention uses the out-of-roundness prediction model capable of simultaneously considering the variation in the attribute information of the steel sheet to be the material and the influence on the out-of-roundness due to the interaction between the press bending step and the seam gap reduction step. This makes it possible to set appropriate operational conditions for improving the out-of-roundness of the steel pipe after the pipe expanding step and possible to perform reconfiguration of the operational conditions quickly by online application, leading to manufacture of the steel pipe having satisfactory out-of-roundness.

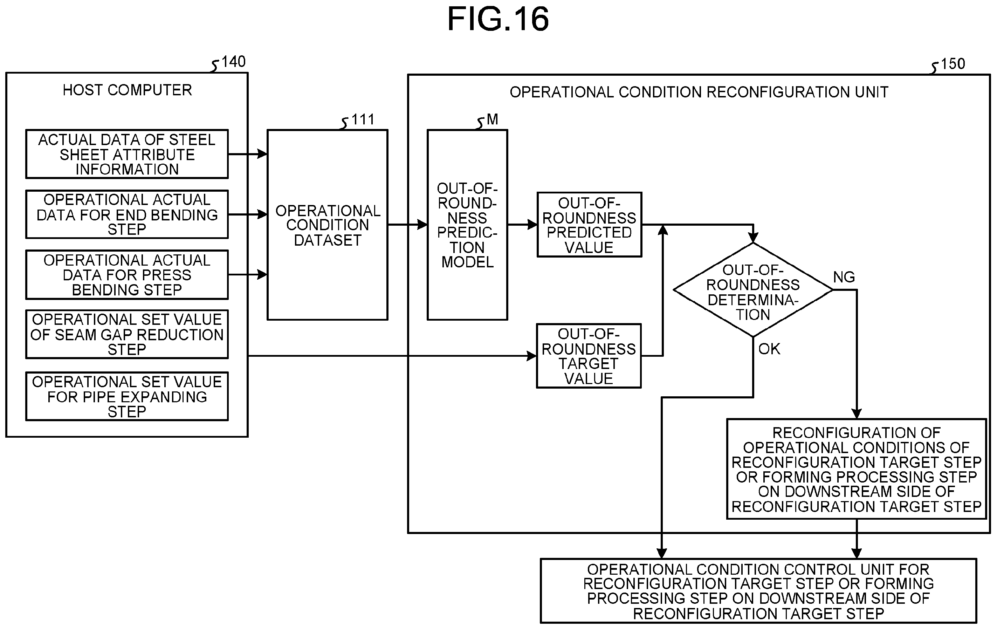

Next, with reference to Table 1 and FIG. 16, an out-of-roundness control method according to an embodiment of the present invention, which is an out-of-roundness control method for a case including an end bending step of a steel sheet prior to a press bending step, will be described.

In the present embodiment, first, a reconfiguration target step is selected from a plurality of forming processing steps constituting the manufacturing step of the steel pipe. Then, before the start of the reconfiguration target step, the out-of-roundness of the steel pipe after the pipe expanding step is predicted using the out-of-roundness prediction model M. Subsequently, reconfiguration is performed on one or more operational parameters selected from at least the operational parameters of the reconfiguration target step or one or more operational parameters selected from the operational parameters of the forming processing step on the downstream side of the reconfiguration target step so as to reduce the out-of-roundness of the steel pipe after the pipe expanding step.

Here, the plurality of forming processing steps constituting the steel pipe manufacturing step refers to the end bending step, the press bending step, the seam gap reduction step, and the pipe expanding step, which are the steps of applying plastic deformation onto the steel sheet to form it into a predetermined shape. For the reconfiguration target step, a certain step is selected from these forming processing steps. Before execution of the forming processing in the selected reconfiguration target step, the out-of-roundness of the steel pipe after the pipe expanding step is predicted using the out-of-roundness prediction model M for the steel pipe. At this time, the forming of the steel sheet has been completed in the forming step on the upstream side of the reconfiguration target step, and thus, when the operational parameters of the forming processing step on the upstream side are to be used, the actual data on operational parameters can be used for the input to the out-of-roundness prediction model M. In contrast, the operational actual data cannot be collected in the downstream forming processing steps including the reconfiguration target step, and thus, the set value preset in the host computer or the like is used for the input to the out-of-roundness prediction model M for the steel pipe. In this manner, the out-of-roundness of the steel pipe after the pipe expanding step for the target material can be predicted.

Subsequently, determination is made as to whether the out-of-roundness predicted as the out-of-roundness of the steel pipe after the pipe expanding step falls within the out-of-roundness allowed as a product. With this operation, when making the out-of-roundness of the steel pipe after the pipe expanding step smaller than the predicted value, it is possible to reconfigure the operational conditions in the reconfiguration target step and the forming processing step on the downstream side of the reconfiguration target step. Here, the operational parameter to be reconfigured may be an operational parameter in the reconfiguration target step or an operational parameter in the forming processing steps downstream of the reconfiguration target step. An operational parameter of the forming processing step suitable for changing the out-of-roundness of the steel pipe after the pipe expanding step will preferably be selected according to a difference between the predicted out-of-roundness and the out-of-roundness allowed as a product. In addition, it is allowable to reconfigure both the operational parameters in the reconfiguration target step and the operational parameters in a certain forming processing step downstream of the reconfiguration target step. This is because the out-of-roundness of the steel pipe after the pipe expanding step can be effectively changed when there is a large difference between the predicted out-of-roundness and the out-of-roundness allowed as a product.

Table 1 specifically illustrates a case of the forming processing step selected as the reconfiguration target step and the forming processing step in which the operational parameters can be reconfigured correspondingly. Case 1 selects the end bending step as the reconfiguration target step in the steel pipe manufacturing step including the end bending step. At this time, before the start of the end bending step, the out-of-roundness of the steel pipe after the pipe expanding step is predicted using the set values of the operational parameters in the forming processing step including the press bending step and the seam gap reduction step. When the predicted out-of-roundness is large, it is possible to reconfigure an arbitrary operational parameter in each forming processing step of the end bending step, the press bending step, the seam gap reduction step, and the pipe expanding step. The operational parameters to be reconfigured are not limited to the operational parameters of the end bending step and may also be the operational parameters of other forming processing steps. When the attribute information of the steel sheet is included as the input to the out-of-roundness prediction model M, the actual data including the measured value and the like related to the attribute information of the steel sheet can be used for the input before starting the end bending step being the reconfiguration target step.

In cases 2 and 3, it is possible to select the reconfiguration target step and the operational parameters to be reconfigured according to the concept similar to case **1.** Case 4 is a case where the pipe expanding step is set as the reconfiguration target step. At this time, before the start of the pipe expanding step, the out-of-roundness of the steel pipe after the pipe expanding step is predicted using the out-of-roundness prediction model M. In this case, at least operational actual data in the press bending step and the seam gap reduction step can be used for the input to the out-of-roundness prediction model M. In addition, it is also allowable to use actual data of the attribute information of the steel sheet or operational actual data in the end bending step. In this manner, the predicted out-of-roundness of the steel pipe after the pipe expanding step is compared with the out-of-roundness allowed as a product, and when reducing the out-of-roundness, the operational parameter in the pipe expanding step is reconfigured. It is preferable to use the pipe expansion rate as the operational parameter of the pipe expanding step to be reconfigured. Note that the amount of change from the initially set value of the pipe expansion rate to be reconfigured may be set based on findings from experience. However, when the input of the out-of-roundness prediction model M includes the pipe expansion rate of the pipe expanding step, the out-of-roundness of the steel pipe after the pipe expanding step may be predicted again using the reset value of the pipe expansion rate as the input to the out-of-roundness prediction model M, and the appropriateness of the conditions for reconfiguration may be determined.

**Table 1**

| Case | Reconfiguration target step | End bending step | Press bending step | Seam gap reduction step | Pipe extending step |
|---|---|---|---|---|---|
| 1 | End bending step | ○ | ○ | ○ | ○ |
| 2 | Press bending step | - | ○ | ○ | ○ |
| 3 | Seam gap reduction step | - | - | ○ | ○ |
| 4 | Pipe extending step | - | - | - | ○ |

| | | | | | |
|---|---|---|---|---|---|
| ○:Forming processing step for which operational parameter is reconfigurable | | | | | |

Here, the steel pipe out-of-roundness control method according to an embodiment of the present invention will be described with reference to FIG. 16. The example illustrated in FIG. 16 is a case where the seam gap reduction step was selected as the reconfiguration target step, the press bending step was completed, and a U-shaped formed body was transferred for the seam gap reduction step. At this time, the operational actual data in the press bending step is transferred to the operational condition reconfiguration unit 150. The operational actual data may be transferred from a control computer provided in each step of controlling each forming processing step via a network. However, the data may be once transferred from the control computer of each forming processing step to the host computer 140 that performs overall control of the steel pipe manufacturing step, and then transferred from the host computer 140 to the operational condition reconfiguration unit 150. In addition, the actual data regarding the attribute information of the steel sheet is transferred from the host computer 140 to the operational condition reconfiguration unit 150 as necessary. Furthermore, operational actual data in the end bending step may also be transferred as necessary. The set values of the operational parameters of the seam gap reduction step and the pipe expanding step, which are forming processing steps downstream of the reconfiguration target step and the reconfiguration target step, are transferred from the control computer for each step to the operational condition reconfiguration unit 150. However, when the set values of the operational parameters in the seam gap reduction step and the pipe expanding step are stored in the host computer 140, the set values may be transferred from the host computer 140 to the operational condition reconfiguration unit 150. Note that the out-of-roundness target value determined according to the specification of the steel pipe as a product is transferred from the host computer 140 to the operational condition reconfiguration unit 150.

The operational condition reconfiguration unit 150 predicts the out-of-roundness of the steel pipe after the pipe expanding step based on these pieces of information by using the out-of-roundness prediction model M online, and compares the predicted out-of-roundness (out-of-roundness predicted value) with the target out-of-roundness (out-of-roundness target value). When the out-of-roundness predicted value is smaller than the out-of-roundness target value, the operational condition reconfiguration unit 150 determines the operational conditions of the remaining forming processing steps without changing the set values of the operational conditions of the press bending step, the seam gap reduction step, and the pipe expanding step, and manufactures the steel pipe. On the contrary, when the predicted out-of-roundness is larger than the out-of-roundness target value, the operational condition reconfiguration unit 150 reconfigures at least the operational condition of the seam gap reduction step or the operational condition of the pipe expanding step. Specifically, the O-press depression amount and the like in the seam gap reduction step can be reconfigured. In addition, the pipe expansion rate in the pipe expanding step can be reconfigured. Furthermore, both the O-press depression amount and the pipe expansion rate can be reconfigured.

The operational condition reconfiguration unit 150 may perform the out-of-roundness prediction again using the operational parameters reconfigured in this manner as the input data to the out-of-roundness prediction model M, confirm whether the predicted out-of-roundness is smaller than the out-of-roundness target value, and determine the reconfigured value of the operational conditions of the seam gap reduction step and the pipe expanding step. The reconfigured operational conditions of the seam gap reduction step and the pipe expanding step are transferred to the individual control computers, so as to be the operational conditions of the seam gap reduction step and the pipe expanding step. By repeatedly performing the out-of-roundness determination in the operational condition reconfiguration unit 150 a plurality of times, an appropriate operational conditions of the seam gap reduction step and the pipe expanding step can be set even when a strict out-of-roundness target value is set, making it possible to manufacture a steel pipe with further improvement in the out-of-roundness. Furthermore, it is also allowable to perform processes in which the out-of-roundness control of the steel pipe after the pipe expanding step having the seam gap reduction step defined as the reconfiguration target step is executed in this manner, the out-of-roundness control of the steel pipe after the pipe expanding step having the pipe expanding step defined as the reconfiguration target step is executed again for the steel pipe formed and welded to the open pipe. This is because the steel pipe out-of-roundness prediction accuracy is further improved due to the state where the operational actual data of the seam gap reduction step has been obtained.

As described above, the steel pipe out-of-roundness control method according to an embodiment of the present invention uses the out-of-roundness prediction model M that takes the influence on the out-of-roundness due to the interaction between the press bending step and the seam gap reduction step into consideration, making possible to set an appropriate operational condition for improving the out-of-roundness of the steel pipe after the pipe expanding step, leading to achievement of manufacture of a steel pipe having satisfactory out-of-roundness. In addition, it is possible to realize highly accurate out-of-roundness control reflecting variation in attribute information of a steel sheet to be a material.

### <Steel pipe out-of-roundness prediction device >

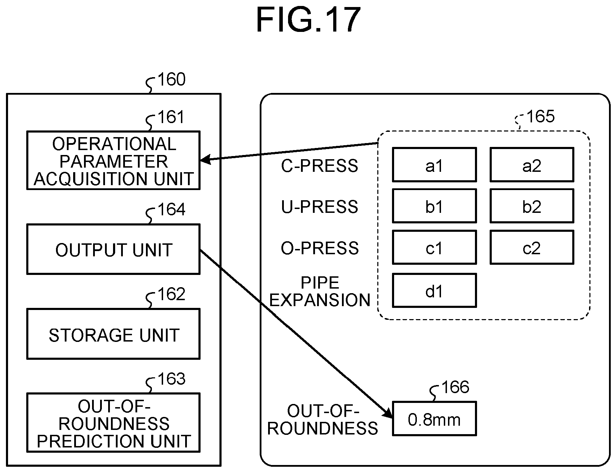

Next, a steel pipe out-of-roundness prediction device according to an embodiment of the present invention will be described with reference to FIG. 17.

FIG. 17 is a diagram illustrating a configuration of a steel pipe out-of-roundness prediction device according to an embodiment of the present invention. As illustrated in FIG. 17, a steel pipe out-of-roundness prediction device 160 according to an embodiment of the present invention includes an operational parameter acquisition unit 161, a storage unit 162, an out-of-roundness prediction unit 163, and an output unit 164.

The operational parameter acquisition unit 161 includes a certain interface capable of acquiring the out-of-roundness prediction model M generated by the machine learning unit from the out-of-roundness prediction model generation unit 130, for example. For example, the operational parameter acquisition unit 161 preferably includes a communication interface for acquiring the out-of-roundness prediction model M from the out-of-roundness prediction model generation unit 130. In this case, the operational parameter acquisition unit 161 may receive the out-of-roundness prediction model M from a machine learning unit 100b using a predetermined communication protocol. In addition, the operational parameter acquisition unit 161 acquires operational conditions for a forming processing facility (facility for executing the forming processing step) from a control computer or a host computer installed in the facility used in each forming processing step. For example, the operational parameter acquisition unit 161 preferably includes a communication interface for acquiring operational conditions. In addition, the operational parameter acquisition unit 161 may acquire input information based on a user's operation. In this case, the steel pipe out-of-roundness prediction device 160 further includes an input unit including one or more input interfaces that detect a user input and acquire input information based on the user's operation. Examples of the input unit include, but are not limited to, a physical key, a capacitive key, a touch screen integrated with a display of the output unit, a microphone for voice input, and the like. For example, the input unit receives an input of the operational condition for the out-of-roundness prediction model M acquired from the out-of-roundness prediction model generation unit 130 by the operational parameter acquisition unit 161.

The storage unit 162 includes at least one semiconductor memory device, at least one magnetic memory device, at least one optical memory device, or a combination of at least two of these. The storage unit 162 functions as, for example, a main storage device, an auxiliary storage device, or cache memory. The storage unit 162 stores any kind of information used for the operation of the steel pipe out-of-roundness prediction device 160. The storage unit 162 stores, for example, the out-of-roundness prediction model M acquired from the out-of-roundness prediction model generation unit 130 by the operational parameter acquisition unit 161, the operational condition acquired from the host computer by the operational parameter acquisition unit 161, and the out-of-roundness information predicted by the steel pipe out-of-roundness prediction device 160. The storage unit 162 may store a system program, an application program, and the like.

The out-of-roundness prediction unit 163 includes one or more processors. In the present embodiment, the processor includes, but not limited to, a general-purpose processor or a dedicated processor specialized for specific processing. The out-of-roundness prediction unit 163 is communicably connected to individual components constituting the steel pipe out-of-roundness prediction device 160, and controls the operation of the entire steel pipe out-of-roundness prediction device 160. The out-of-roundness prediction unit 163 may be any general-purpose electronic device such as a personal computer (PC) or a smartphone. The out-of-roundness prediction unit 163 is not limited thereto, and may be one server device or a plurality of server devices capable of communicating with each other, or may be another electronic device dedicated to the steel pipe out-of-roundness prediction device 160. The out-of-roundness prediction unit 163 calculates a predicted value of the steel pipe out-of-roundness information using the operational conditions acquired through the operational parameter acquisition unit 161 and the out-of-roundness prediction model M acquired from the out-of-roundness prediction model generation unit 130.

The output unit 164 outputs the predicted value of the out-of-roundness information of the steel pipe calculated by the out-of-roundness prediction unit 163 to a device for setting the operational conditions of the forming processing facility. The output unit 164 may include one or more output interfaces that output information and notify the user. The output interface is a display, for example. Examples of the display include an LCD or an organic EL display. The output unit 164 outputs data obtained by the operation of the steel pipe out-of-roundness prediction device 160. The output unit 164 may be connected to the steel pipe out-of-roundness prediction device 160 as an external output device instead of being provided in the steel pipe out-of-roundness prediction device 160. As the connection method, for example, any method such as USB, HDMI (registered trademark), or Bluetooth (registered trademark) can be used. Examples of the output unit 164 include, but are not limited to, a display that outputs information by video, a speaker that outputs information by audio, and the like. For example, the output unit 164 presents the predicted value of the out-of-roundness information calculated by the out-of-roundness prediction unit 163 to the user. The user can appropriately set the operational conditions of the forming processing facility based on the predicted value of the out-of-roundness presented by the output unit 164.

A more preferable form of the steel pipe out-of-roundness prediction device 160 after the pipe expanding step as described above is a terminal device such as a tablet terminal including: an input unit 165 that acquires input information based on a user's operation; and a display unit 166 that displays a predicted value of the out-of-roundness information calculated by the out-of-roundness prediction unit 163. This type of device has a function of acquiring input information based on a user's operation from the input unit 165, and updating a part or all of the operational parameters of the forming processing facility already input to the steel pipe out-of-roundness prediction device 160, by using the acquired input information. That is, when the out-of-roundness information of the steel pipe has been predicted by the out-of-roundness prediction unit 163 for the steel sheet being processed in the forming processing facility, it is possible to provide a function of receiving an operation, made by an operator using the terminal device, of performing a correction input of a part of the operational parameters of the forming processing facility already input to the operational parameter acquisition unit 161. At this time, the operational parameter acquisition unit 161 holds the initial input data for the operational parameters to which the correction input has not been made from the terminal device among the operational parameters of the forming processing facility, and changes only the operational parameter to which the correction input has been made. With this configuration, new input data to the out-of-roundness prediction model M is generated in the operational parameter acquisition unit 161, and a predicted value of the out-of-roundness information based on the input data is calculated by the out-of-roundness prediction unit 163. Furthermore, the calculated predicted value of the out-of-roundness information is displayed on the display unit 166 of the terminal device through the output unit 164. With this procedure, the person such as an operator of the forming processing facility and a factory manager can immediately confirm the predicted value of the out-of-roundness information when the operational parameter of the forming processing facility has been changed, and can promptly change the operational condition to an appropriate operational condition.

### [Examples]

### [Example 1]

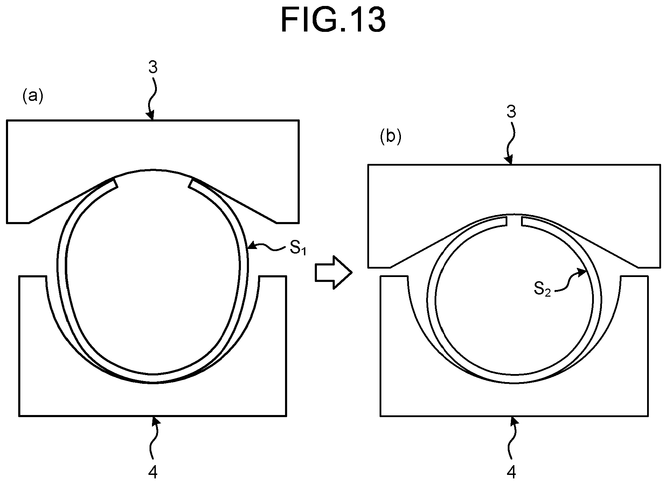

The present Example used a line pipe steel sheet (API grade X60) having a sheet thickness of 38.0 mm to 38.4 mm and a sheet width of 2700 mm to 2720 mm and generated an out-of-roundness prediction model after an offline pipe expanding step, in accordance with manufacturing conditions for manufacturing a steel pipe having a diameter of 36 inches after a pipe expanding step through a press bending step, a seam gap reduction step, a welding step, and a pipe expanding step. An example of a finite element model generated by a finite element model generation unit in the seam gap reduction step used in the present Example is illustrated in FIG. 13. The finite element analysis solver used was Abaqus 2019, and the calculation time per case was approximately three hours. The number of datasets accumulated in the database was 300, and Gaussian process regression using a radial basis function as a basis function was used as a machine learning model.

The attribute information of the steel sheet is selected as items of a representative sheet thickness (in-plane average sheet thickness), sheet width, and yield stress of the steel sheet. The range of variation as the operational condition was specified from the manufacturing performance record, and the input data of the calculation was changed within the range. For the operational parameters of the press bending step, the number of times of press depression and the press depression position were selected. At this time, the number of times of press depression was changed within a range of 7 to 15 times with 11 times as a reference condition. Regarding the press depression position, the pressing was performed at equal intervals in the sheet width direction according to the number of times of pressing, and the press depression position was determined according to the number of times of pressing. Based on the press depression amount, defined as an amount by which the punch leading end reaches a position of 15.8 mm from a line connecting the uppermost portions of the rod-shaped member, a bending angle for one pressing was set to 30°.

Next, the steel sheet was placed on a die having an interval between the rod-shaped members set to 450 mm, and press depression was started with a position 1120 mm away from the central portion in the width direction of the steel sheet set as a reference, by a punch having a processing surface with a radius of 308 mm. When the number of times of press depression was 11, press depression was performed five times from the right side of FIG. 2 toward the central portion in the width direction under the condition of a sheet feed pitch of 224 mm. Thereafter, the end of the sheet on the left side of FIG. 2 was moved to the vicinity of the rod-shaped member, and press depression was performed six times for the left half of the steel sheet beginning at the position of 1120 mm from the end under the condition of a sheet feed pitch of 224 mm.

The seam gap reduction step used an O-press device. An O-press reduction ratio was selected as an operational parameter of the seam gap reduction step, and the operational conditions were varied in the range of 1.0% to 3.0%. As another operational condition to be set was a condition using: an upper die having an arc surface with a radius R of 457.2 mm and a central angle θc of 60° and having a flat surface connected to the arc surface at an angle θd of 30°; and a lower die having a concave arc surface with a radius R of 502.9 mm. On the other hand, a constant value of 1.0% was used as the pipe expansion rate which is an operational parameter of the pipe expanding step.

In the present Example, the analysis conditions as described above were set in the out-of-roundness offline calculation unit, the analysis conditions were changed within the range of the above operational conditions, and a calculation result of the out-of-roundness after the pipe expanding step obtained by the analysis was accumulated in a database. Next, an out-of-roundness prediction model was generated based on the accumulated database. In the present Example, the out-of-roundness prediction model generated in this manner is applied online. The out-of-roundness in the present Example was defined such as out-of-roundness = Dmax - Dmin when outer diameters at positions facing each other were selected by dividing the tube into 3600 equal parts in the circumferential direction, and a maximum diameter and a minimum diameter among them were defined as Dmax and Dmin, respectively.

In the online step, before the start of the press bending step, a representative sheet thickness and a sheet width of the steel sheet were acquired from the host computer as actual data of attribute information of the steel sheet to be a material. In addition, test data of the yield stress obtained in the inspection step of the thick sheet rolling step was acquired. Along with this, set values of the operational conditions of the press bending step and the seam gap reduction step were acquired from the host computer. In the manufacturing step of the steel pipe targeted in the present Example, the set value of the operational condition preset by the host computer is such that the number of times of pressing in the press bending step was 11, the position 1120 mm away from the central portion in the width direction of the steel sheet was set as the first press depression position, and the press depression position was set at a pitch of 224 mm in the width direction of the steel sheet. In addition, the press depression amount at each press depression position was a preset value under the condition of 15.8 mm. Meanwhile, in the seam gap reduction step using the O-press device, a condition for setting the O-press reduction ratio to 2.0% was set as the set value of the operational condition preset by the host computer.

In the present Example, before the start of the press bending step, the out-of-roundness of the steel pipe after the pipe expanding step is predicted using these set values together with the representative sheet thickness and the sheet width, which are the actual data of the attribute information of the steel sheet, as an input to the out-of-roundness prediction model. On the other hand, in the host computer, the out-of-roundness target value was set to 10 mm, the predicted steel pipe out-of-roundness (out-of-roundness predicted value) is compared with the out-of-roundness target value, and when the predicted out-of-roundness exceeded the out-of-roundness target value, the operational condition of the press bending step was reconfigured. The number of times of pressing was selected as the operational condition to be reconfigured. As a result, in the invention example, it was confirmed that the average value of the out-of-roundness was 4.0 mm, and the acceptance rate was 100%. In comparison, in a case where, as a comparative example, manufacture was conducted while the operational condition of the press bending step was set to the set value preset by the host computer, the average value of the out-of-roundness was 11.2 mm, and the acceptance rate was 80%.

### [Example 2]

The present Example used a line pipe steel sheet (API grade X60) having a sheet thickness of 50.0 mm to 50.4 mm and a sheet width of 4450 mm to 4460 mm and generated an out-of-roundness prediction model after an offline pipe expanding step, for a case of manufacturing a steel pipe having a diameter of 56 inches after a pipe expanding step through a press bending step, a seam gap reduction step, a welding step, and a pipe expanding step. In this case, the parameters which are to be the input to the steel pipe out-of-roundness prediction model, namely, the parameter of the attribute information of the steel sheet, the operational parameter of the press bending step, and the operational parameter of the seam gap reduction step, were selected to be the same as those in Example 1. However, the ranges of these operational parameters were different from those of Example 1. The operational condition dataset was set in a range of a representative sheet thickness of 50.0 mm to 50.4 mm and a sheet width of 4450 mm to 4460 mm, which are parameters of the attribute information of the steel sheet.

As an operational condition of the press bending step, a lower die interval of the press bending equipment was set to 620 mm, and a position 1824 mm away from the central portion of the steel sheet in the width direction was set as a start point of press depression using a punch with a leading end having a curvature radius 478 mm. The operational condition dataset was set in a range in which the number of times of press depression in the press bending step was 7 to 15. At this time, the number of press depression preset in the host computer was 11. In this case, an operational condition was set to perform press depression six times, specifically, performing press depression five times with the feed pitch set to 365 mm from one start point of press depression for the steel sheet toward the center side of the steel sheet in the width direction, and performing press depressions six times with the feed pitch set to 365 mm from the other start point of the press depression toward the center side of the steel sheet in the width direction. In addition, the press depression amount was 33.8 mm under any press depression. When the number of times of pressing reduction was different, only the feed pitch was changed, while the press depression start position and the press depression amount were set to constant set values.

The seam gap reduction step used an O-press device. The upper die of the O-press device used was the die having: an arc surface with a radius R of 704.0 mm and a central angle θc of 60°; and a flat surface connected to the arc surface at an angle θd of 30°. The lower die used was a die having a concave arc surface with a radius R of 704.0 mm. The operational parameter in the seam gap reduction step was the O-press reduction ratio, and the operational condition dataset was set in the range of 1.0 % to 3.0%. The O-press reduction ratio preset in the host computer was 2.0%. In addition, the set value of the pipe expansion rate as an operational parameter in the pipe expanding step was 0.9%.

A plurality of operational condition datasets was prepared, in which the manufacturing conditions in the forming processing step of the steel pipe as described above are set, and the representative sheet thickness and the sheet width, which are parameters of the attribute information of the steel sheet, the number of times of press depression, which is an operational parameter in the press bending step, and the O-press reduction ratio, which is an operational parameter in the seam gap reduction step, had been changed. Using the datasets, finite element analysis was performed in the basic data acquisition unit, and steel pipe out-of-roundness information after the pipe expanding step was accumulated in the database. With the 300 datasets accumulated in the database, an out-of-roundness prediction model having the out-of-roundness of the steel pipe after the pipe expanding step as output was generated offline using a Gaussian process regression using a radial basis function as a basis function, as a machine learning model.

The out-of-roundness prediction model generated as described above is transferred to the online operational condition reconfiguration unit, and is configured to receive the operational condition dataset acquired from the host computer as an input, and configured to output the steel pipe out-of-roundness predicted value after the pipe expanding step. In the present Example, the press bending step is selected as the reconfiguration target step, and before the start of the press bending step, the representative sheet thickness and the sheet width, which are actual data of the attribute information of the steel sheet, as well as the operational set values of the press bending step and the seam gap reduction step, are acquired from the host computer to constitute the operational condition dataset, and the out-of-roundness of the steel pipe after the pipe expanding step was predicted using the out-of-roundness prediction model. Here, the out-of-roundness target value set by the host computer for the target steel pipe was 14.2 mm, and the out-of-roundness is determined by comparison between the out-of-roundness target value and the out-of-roundness predicted value. When the out-of-roundness predicted value exceeded the out-of-roundness target value, the operational condition of the seam gap reduction step, which is the forming processing step downstream of the reconfiguration target step, was to be reconfigured. The operational conditions to be reconfigured were the O-press reduction ratio.

Such an out-of-roundness control method was used to manufacture 100 steel pipes. As a result, the average value of out-of-roundness of the steel pipe after the pipe expanding step was 10.0 mm with respect to the out-of-roundness target value 14.2 mm, with the acceptance rate of 90%. In comparison, in a case where the steel pipe was manufactured without using the out-of-roundness control method of the present Example and without changing the operational condition preset in the host computer, the average value of out-of-roundness was 14.4 mm, with the acceptance rate of 60%.

### [Example 3]

The present Example used a line pipe steel sheet (API grade X60) having a sheet thickness of 38.0 mm to 38.4 mm and a sheet width of 2700 mm to 2720 mm and generated an out-of-roundness prediction model after an offline pipe expanding step, for a case of manufacturing a steel pipe having a diameter of 36 inches after a pipe expanding step through an end bending step, a press bending step, a seam gap reduction step, a welding step, and a pipe expanding step. In this case, the parameters which are to be the input to the steel pipe out-of-roundness prediction model, namely, the parameter of the attribute information of the steel sheet, the operational parameter of the press bending step, and the operational parameter of the seam gap reduction step, were the same as those in Example 1. In addition, the range of each operational parameter constituting the operational condition dataset was also the same as that in Example 1.

On the other hand, in the end bending step, the same pair of upper and lower dies used in the C-press device was used with no change for each steel sheet, the end bending processing width was selected as the operational parameter of the end bending step, and the operational condition dataset in the basic data acquisition unit was changed so that the range was changed within a range of 180 mm to 240 mm. Furthermore, in the present Example, the pipe expansion rate was selected as the operational parameter of the pipe expanding step, and the operational condition dataset in the basic data acquisition unit was changed so that the pipe expansion rate was changed within a range of 0.6% to 1.4%.

Under the above conditions, using Abaqus 2019 as a finite element analysis solver, a finite element analysis was performed on the operational condition dataset that had been set in the above range. The out-of-roundness after the pipe expanding step, obtained by the analysis, was accumulated in the database in association with the operational condition dataset. The number of datasets accumulated in the database was 600. A Gaussian process regression using a radial basis function as a basis function was used on the machine learning model, and an out-of-roundness prediction model having the out-of-roundness of the steel pipe after the pipe expanding step as an output was generated offline.

The out-of-roundness prediction model generated as described above is incorporated in an out-of-roundness prediction device that performs the steel pipe out-of-roundness prediction online. Using the operational parameter in the manufacturing step of the steel pipe acquired online from the host computer as an input, the out-of-roundness prediction device outputs a predicted value for the out-of-roundness of the steel pipe after the pipe expanding step. The out-of-roundness prediction device used in the present Example was a tablet terminal capable of acquiring input information based on an operation of an operator from an input unit, and capable of updating, by using the acquired input information, some or all of the operational parameters of the forming processing facility which had been input to the out-of-roundness prediction device. This tablet terminal has a function of recognizing the operational parameter for which the correction input is made by an operation of the operator and displaying, on a display unit, a predicted value of the out-of-roundness information reflecting the value of the correction input.

In the online manufacturing step in the present Example, as a first step before starting the end bending step, the operational parameter acquisition unit acquires actual data of attribute information of the steel sheet and the preset operational set values of the press bending step, the seam gap reduction step, and the pipe expanding step, from the host computer. The out-of-roundness prediction unit then performed an output of the out-of-roundness predicted value of the steel pipe after the pipe expanding step onto the display unit of the tablet terminal using the acquired operational condition dataset as an input. In response to this, the operator who manages the operation of the manufacturing step of the steel pipe confirms the displayed out-of-roundness predicted value, and compares it with the value (7.0 mm in this case) set as the out-of-roundness target value for the target steel pipe. When the predicted out-of-roundness is large, the operational condition of the end bending processing width which is the operational parameter of the end bending step can be corrected by an input from an operation panel of the C-press device.

In the present Example, the operator corrected the value of the end bending processing width, which is the operational parameter of the end bending step displayed on the display unit of the tablet terminal, within a range of 180 mm to 240 mm. The out-of-roundness prediction device according to the present Example updates the end bending processing width corrected by the operator to a corrected value as a parameter to be an input to the out-of-roundness prediction model. The out-of-roundness prediction device displays the out-of-roundness predicted value on the tablet terminal again while maintaining the value already acquired by the operational parameter acquisition unit, for the other inputs. The operator confirmed the displayed out-of-roundness predicted value, determined the condition of the edge bending processing width which is the operational parameter of the end bending step, and performed the setting of a new set value for the operation panel of the C-press device.

In this manner, using the out-of-roundness prediction device of the present Example, 50 steel pipes were manufactured with an operation, by an operator, of appropriately changing the operational conditions in the steel pipe forming processing step. As a result, with respect to the out-of-roundness target value of 7.0 mm, the out-of-roundness of the steel pipe after the pipe expanding step was 4.2 mm as an average value, and the acceptance rate was 100%. In comparison, in a case where the steel pipe was manufactured without using the out-of-roundness prediction device of the present Example and without changing the operational condition preset in the host computer, the average value of out-of-roundness was 9.1 mm, with the acceptance rate of 35%. That is, it was confirmed that the out-of-roundness prediction device according to the present Example is effective in assisting the judgment of the operator in the steel pipe manufacturing step.

### Industrial Applicability

According to the present invention, it is possible to provide a steel pipe out-of-roundness prediction model generation method capable of generating an out-of-roundness prediction model that accurately and promptly predicts the out-of-roundness of a steel pipe after a pipe expanding step in a steel pipe manufacturing step including a plurality of steps. In addition, according to the present invention, it is possible to provide a steel pipe out-of-roundness prediction method and a steel pipe out-of-roundness prediction device capable of accurately and promptly predicting the out-of-roundness of the steel pipe after the pipe expanding step in the steel pipe manufacturing step including a plurality of steps. In addition, according to the present invention, it is possible to provide a steel pipe out-of-roundness control method capable of accurately controlling the out-of-roundness of the steel pipe after the pipe expanding step in the steel pipe manufacturing step including a plurality of steps. Furthermore, according to the present invention, it is possible to provide a steel pipe manufacturing method capable of manufacturing a steel pipe having a desired out-of-roundness with good yield.

### Reference Signs List

1 DIE
1a, 1b ROD-SHAPED MEMBER
2 PUNCH
2a PUNCH LEADING END
2b PUNCH SUPPORT
3 UPPER DIE
4 LOWER DIE
10a, 10b LOWER TOOL
11a, 11b SPRING MEANS
12 PUNCH
13 UPPER TOOL
16 PIPE EXPANDING DIE
17 TAPERED OUTER CIRCUMFERENTIAL SURFACE
18 PULL ROD
20 ARM
21a, 21b DISPLACEMENT METER
22 ROTATION ANGLE DETECTOR
25 ROTATING ARM
26a, 26b PRESSING ROLLER
30 C-PRESS DEVICE
31 CONVEYANCE MECHANISM
31a CONVEYANCE ROLL
32A, 32B PRESS MECHANISM
33 UPPER DIE
33a FORMING SURFACE
34 LOWER DIE
34a PRESSING SURFACE
36 HYDRAULIC CYLINDER
37 CLAMP MECHANISM
110 BASIC DATA ACQUISITION UNIT
111 OPERATIONAL CONDITION DATASET
112 OUT-OF-ROUNDNESS OFFLINE CALCULATION UNIT
112a FINITE ELEMENT MODEL GENERATION UNIT IN PRESS BENDING STEP
112b FINITE ELEMENT MODEL GENERATION UNIT IN SEAM GAP REDUCTION STEP
112c FINITE ELEMENT MODEL GENERATION UNIT IN PIPE EXPANDING STEP
112d FINITE ELEMENT ANALYSIS SOLVER
120 DATABASE
130 OUT-OF-ROUNDNESS PREDICTION MODEL GENERATION UNIT
140 HOST COMPUTER
150 OPERATIONAL CONDITION RECONFIGURATION UNIT
160 STEEL PIPE OUT-OF-ROUNDNESS PREDICTION DEVICE
161 OPERATIONAL PARAMETER ACQUISITION UNIT
162 STORAGE UNIT
163 OUT-OF-ROUNDNESS PREDICTION UNIT
164 OUTPUT UNIT
165 INPUT UNIT
166 DISPLAY UNIT
G SEAM GAP PORTION
M OUT-OF-ROUNDNESS PREDICTION MODEL
P STEEL PIPE
R1, R2 REGION
S STEEL SHEET
S₁ FORMED BODY
S₂ OPEN PIPE

## Claims

1. A steel pipe (P) out-of-roundness control method for a steel pipe (P) manufacturing process including: a press bending step of processing a steel sheet into a formed body having a U-shaped cross section by a plurality of times of pressing by a punch (2, 12); a seam gap reduction step of reducing a seam gap portion (G) of the formed body having a U-shaped cross section to form an open pipe; a welding step of joining ends of the open pipe to each other; and a pipe expanding step of expanding an inner diameter of the steel pipe (P) having ends joined to each other, the control method **characterized by**
a step of predicting steel pipe (P) out-of-roundness information after the pipe expanding step,
the prediction performed before starting a reconfiguration target step selected from an end bending step, a press bending step, a seam gap reduction step, and the pipe expanding step included in the steel pipe (P) manufacturing step, the prediction being performed by using a steel pipe (P) out-of-roundness prediction method, and
reconfiguring one or more operational parameters selected from at least operational parameters of the reconfiguration target step or one or more operational parameters selected from operational parameters of a forming processing step on a downstream side of the reconfiguration target step, the reconfiguration performed based on the predicted steel pipe (P) out-of-roundness information,
wherein the steel pipe (P) out-of-roundness prediction method comprises:
an operational parameter acquisition step of acquiring online an operational condition dataset (111) to be set as an operational condition of the steel pipe (P) manufacturing step, as an input of a steel pipe (P) out-of-roundness prediction model (M) generated by a steel pipe (P) out-of-roundness prediction model generation method; and
an out-of-roundness prediction step of predicting out-of-roundness information of a steel pipe (P) after a pipe expanding step by inputting the operational condition dataset (111) acquired in the operational parameter acquisition step to the out-of-roundness prediction model (M),
wherein the steel pipe (P) out-of-roundness prediction model generation method comprises:
a basic data acquisition step of executing a numerical operation having an operational condition dataset (111) including one or more parameters selected from attribute information of the steel sheet, one or more parameters selected from operational parameters of the press bending step, and one or more parameters selected from operational parameters of the seam gap reduction step, as input data, and having a steel pipe (P) out-of-roundness after the pipe expanding step, as output data, with the execution of the calculation conducted a plurality of times while changing the operational condition dataset (111), and generating, by this calculation, a plurality of sets of steel pipe (P) out-of-roundness data after the pipe expanding step corresponding to the operational condition dataset (111), offline as training data; and
an out-of-roundness prediction model generation step of generating an out-of-roundness prediction model (M) having the operational condition dataset (111), as input data, and having the out-of-roundness of the steel pipe (P) after the pipe expanding step, as output data, the generation of the model performed offline by machine learning using the plurality of sets of training data generated in the basic data acquisition step.

2. The steel pipe (P) out-of-roundness control method according to claim 1, wherein the basic data acquisition step includes a step of calculating, by using a finite element method, the out-of-roundness of the steel pipe (P) after the pipe expanding step from the operational condition dataset (111).

3. The steel pipe (P) out-of-roundness control method according to claim 1 or 2, wherein the out-of-roundness prediction model (M) includes one or more parameters selected from the operational parameters of the pipe expanding step, as the operational condition dataset (111).

4. The steel pipe (P) out-of-roundness control method according to any one of claims 1 to 3, wherein the steel pipe (P) manufacturing step includes an end bending step of applying bending to an end of the steel sheet in a width direction prior to the press bending step, and the out-of-roundness prediction model (M) includes one or more parameters selected from operational parameters of the end bending step, as the operational condition dataset (111).

5. The steel pipe (P) out-of-roundness control method according to any one of claims 1 to 4, wherein the operational parameter of the press bending step includes: press position information and a press depression amount regarding an operation in which a punch (2, 12) used in the press bending step presses a steel sheet; and the number of times of pressing performed through the press bending step.

6. The steel pipe (P) out-of-roundness control method according to any one of claims 1 to **5,** wherein the machine learning to be used is a type of machine learning selected from a neural network, decision tree learning, random forest, Gaussian process regression, and support vector regression.

7. A steel pipe (P) out-of-roundness control method according to any one of claims 1 to 6, comprising: a step of acquiring an operational condition dataset (111) including an actual value of attribute information of the steel sheet, a set value of an operational parameter of the press bending step, and a set value of an operational parameter of the seam gap reduction step, predicting an out-of-roundness of the steel pipe (P) after a pipe expanding step by inputting the acquired operational condition dataset (111) to the out-of-roundness prediction model (M), the prediction performed before starting the press bending step by using the steel pipe (P) out-of-roundness prediction method, and reconfiguring at least one of the set value of the operational parameter of the press bending step or the set value of the operational parameter of the seam gap reduction step, wherein the predicted out-of-roundness is reduced.

8. A steel pipe (P) manufacturing method comprising a step of manufacturing a steel pipe (P) using the steel pipe (P) out-of-roundness control method according to any one of claims 1 to 7.

9. A steel pipe (P) out-of-roundness prediction device for predicting an out-of-roundness of a steel pipe (P) after a pipe expanding step, wherein the steel pipe (P) is manufactured in a steel pipe (P) manufacturing process, the manufacturing process includes: a press bending step of processing a steel sheet into a formed body having a U-shaped cross section by a plurality of times of pressing by a punch (2, 12); a seam gap reduction step of reducing a seam gap portion (G) of the formed body having a U-shaped cross section to form an open pipe; a welding step of joining ends of the open pipe to each other; and the pipe expanding step of expanding an inner diameter of the steel pipe (P) having ends joined to each other,
the device **characterized by**
a basic data acquisition unit (110) that executes a numerical operation having an operational condition dataset (111) including one or more parameters selected from attribute information of the steel sheet, one or more operational parameters selected from operational parameters of the press bending step, and one or more operational parameters selected from operational parameters of the seam gap reduction step, as input data, and having steel pipe (P) out-of-roundness information after the pipe expanding step, as output data, the calculation conducted a plurality of times while changing the operational condition dataset (111), and that generates, by this calculation, a plurality of sets of data of the steel pipe (P) out-of-roundness information after the pipe expanding step corresponding to the operational condition dataset (111), as training data;
an out-of-roundness prediction model generation unit (130) that generates an out-of-roundness prediction model (M) having the operational condition dataset (111), as input data, and having the steel pipe (P) out-of-roundness information after the pipe expanding step, as output data, the generation of the model performed by machine learning using the plurality of sets of training data generated by the basic data acquisition unit (110);
an operational parameter acquisition unit (161) that acquires online an operational condition dataset (111) to be set as an operational condition of the steel pipe (P) manufacturing step;
an out-of-roundness prediction unit (163) that predicts steel pipe (P) out-of-roundness information after the pipe expanding step corresponding to the operational condition dataset (111) acquired by the operational parameter acquisition unit (161), the prediction performed online using the out-of-roundness prediction model (M) generated by the out-of-roundness prediction model generation unit (130); and
an operational condition reconfiguration unit (150) that reconfigures one or more operational parameters selected from at least operational parameters of the reconfiguration target step or one or more operational parameters selected from operational parameters of a forming processing step on a downstream side of the reconfiguration target step, the reconfiguration performed based on the predicted steel pipe (P) out-of-roundness information.

10. The steel pipe (P) out-of-roundness prediction device (160) according to claim 9, comprising
a terminal device including an input unit (165) that acquires input information based on a user's operation, and a display unit (166) that displays the out-of-roundness information,
wherein the operational parameter acquisition unit (161) updates a part or all of the operational condition dataset (111) in the steel pipe (P) manufacturing step based on the input information acquired by the input unit (165), and
the display unit (166) displays the steel pipe (P) out-of-roundness information predicted by the out-of-roundness prediction unit (163) by using the updated operational condition dataset (111).

## Patentansprüche

1. Verfahren zur Kontrolle der Unrundheit eines Stahlrohrs (P) für einen Herstellungsprozess für ein Stahlrohr (P), welches beinhaltet: einen Pressbiegeschritt des Verarbeitens eines Stahlblechs durch eine Vielzahl von Pressungen durch einen Stempel (2, 12) zu einem Formkörper mit U-förmigem Querschnitt; einen NahtspaltVerringerungsschritt des Verringerns eines Nahtspaltbereichs (G) des geformten Körpers mit U-förmigem Querschnitt, um ein offenes Rohr zu bilden; einen Schweißschritt des Verbindens der Enden des offenen Rohrs miteinander und einen Rohraufweitungsschritt des Aufweitens eines Innendurchmessers des Stahlrohrs (P) mit Enden, die miteinander verbunden sind,
wobei das Kontrollverfahren **gekennzeichnet ist durch**
einen Schritt des Vorhersagens von Informationen zur Unrundheit des Stahlrohrs (P) nach dem Rohraufweitungsschritt,
wobei die Vorhersage vor dem Starten eines Zielschritts der Neukonfiguration durchgeführt wird, welcher aus einem Endbiegeschritt, einem Pressbiegeschritt, einem Nahtspalt-Verringerungsschritt und dem Rohraufweitungsschritt ausgewählt ist, welche im Herstellungsschritt des Stahlrohrs (P) enthalten sind, wobei die Vorhersage unter Verwendung eines Verfahrens zur Vorhersage der Unrundheit des Stahlrohrs (P) durchgeführt wird, und
Neukonfigurieren eines oder mehrerer Betriebsparameter, die ausgewählt sind aus mindestens den Betriebsparametern des Zielschritts zur Neukonfiguration oder aus einem oder mehreren Betriebsparametern, die ausgewählt sind aus Betriebsparametern eines Formungsschritts auf einer dem Zielschritt zur Neukonfiguration nachgelagerten Seite wobei die Neukonfiguration auf der Grundlage der vorhergesagten Informationen zur Unrundheit des Stahlrohrs (P) durchgeführt wird,
wobei das Verfahren zur Vorhersage der Unrundheit des Stahlrohrs (P) umfasst:
einen Betriebsparameter-Erfassungsschritt des Online-Erfassens eines Datensatzes (111) von Betriebsbedingungen, welcher als Betriebsbedingung des Herstellungsschritts für das Stahlrohr (P)- festzulegen ist, als Eingabe eines Unrundheit-Vorhersagemodells (M) für das Stahlrohr (P), welches **durch** ein Verfahren zur Erzeugung eines Unrundheit-Vorhersagemodells (M) für ein Stahlrohr (P) erzeugt wurde; und
einen Schritt zur Vorhersage der Unrundheit des Vorhersagens von Informationen zur Unrundheit eines Stahlrohrs (P) nach einem Rohraufweitungsschritt, indem der Datensatz von Betriebsbedingungen (111), der im Schritt zur Erfassung von Betriebsparametern erfasst wurde, in das Modell (M) zur Vorhersage der Unrundheit eingegeben wird,
wobei das Verfahren zur Erstellung eines Modells zur Vorhersage der Unrundheit eines Stahlrohrs (P) umfasst:
einen Schritt zur Erfassung von Basisdaten des Ausführens einer numerische Berechnung mit ein Betriebsbedingungsdatensatz (111) einschließlich eines oder mehrerer Parameter, die ausgewählt sind aus den Eigenschaftsinformationen des Stahlblechs, einem oder mehreren Parametern, die aus Betriebsparametern des Pressbiegeschritts ausgewählt sind, und einem oder mehreren Parametern, die aus den Betriebsparametern des Nahtspaltverringerungsschritts ausgewählt sind, als Eingabedaten und mit einer Unrundheit des Stahlrohrs (P) nach dem Rohraufweitungsschritt als Ausgabedaten, wobei die Berechnung vielfach unter Änderung des Betriebsbedingungsdatensatzes (111) durchgeführt wird und **durch** diese Berechnung eine Vielzahl von Sätzen von Daten zur Unrundheit des Stahlrohrs (P) nach dem Rohraufweitungsschritt, welche dem Betriebsbedingungsdatensatz (111) entsprechen, offline als Trainingsdaten erzeugt werden; sowie
einen Schritt zur Erstellung eines Unrundheit-Vorhersagemodells des Erzeugens eines Unrundheit-Vorhersagemodells (M) mit dem Betriebsbedingungsdatensatz (111) als Eingabedaten und mit der Unrundheit des Stahlrohrs (P) nach dem Rohraufweitungsschritt als Ausgabedaten, wobei die Erstellung des Modells offline **durch** maschinelles Lernen unter Verwendung der Vielzahl von im Schritt zur Erfassung von Basisdaten erzeugten Sätzen von Trainingsdaten durchgeführt wird.

2. Verfahren zur Kontrolle der Unrundheit eines Stahlrohrs (P) gemäß Anspruch 1, wobei der Schritt der Erfassung von Basisdaten einen Schritt des Berechnens der Unrundheit des Stahlrohrs (P) nach dem Rohraufweitungsschritt aus dem Datensatz der Betriebsbedingungen (111) unter Verwendung einer Finite-Elemente-Methode beinhaltet.

3. Verfahren zur Kontrolle der Unrundheit eines Stahlrohrs (P) gemäß Anspruch 1 oder 2, wobei das Modell (M) zur Vorhersage der Unrundheit einen oder mehrere Parameter, die aus den Betriebsparametern des Rohraufweitungsschritts ausgewählt sind, als den Datensatz der Betriebsbedingungen (111) beinhaltet.

4. Verfahren zur Kontrolle der Unrundheit eines Stahlrohrs (P) gemäß einem der Ansprüche 1 bis 3, wobei der Herstellungsschritt des Stahlrohrs (P) einen Endbiegeschritt des Anwendens einer Biegung auf ein Ende des Stahlblechs in einer Breitenrichtung vor dem Pressbiegeschritt, beinhaltet und das Modell (M) zur Vorhersage der Unrundheit einen oder mehrere Parameter beinhaltet, welche aus den Betriebsparametern des Endbiegeschritts ausgewählt sind, als den Datensatz der Betriebsbedingungen (111) beinhaltet.

5. Verfahren zur Kontrolle der Unrundheit von Stahlrohren (P) gemäß einem der Ansprüche 1 bis 4, wobei der Betriebsparameter des Pressbiegeschritts beinhaltet: Informationen zur Pressposition und eine Eindrücktiefe in Bezug auf einen Vorgang, bei dem ein im Pressbiegeschritt verwendeter Stempel (2, 12) auf ein Stahlblech drückt; sowie die Anzahl der im Pressbiegeschritt durchgeführten Pressvorgänge.

6. Verfahren zur Kontrolle der Unrundheit von Stahlrohren (P) gemäß einem der Ansprüche 1 bis 5, wobei das zu verwendende maschinelle Lernen eine Art des maschinellen Lernens ist, welche aus einem neuronalen Netzwerk, dem Lernen mit Entscheidungsbäumen, dem Random-Forest-Verfahren, der Gaußschen Prozessregression und der Support-Vektor-Regression ausgewählt ist.

7. Verfahren zur Kontrolle der Unrundheit eines Stahlrohrs (P) gemäß einem der Ansprüche 1 bis 6, umfassend: einen Schritt des Erfassens eines Datensatzes von Betriebsbedingungen (111), der einen Istwert von Eigenschaftsinformationen des Stahlblechs, einen Sollwert eines Betriebsparameters des Pressbiegeschritts und einen Sollwert eines Betriebsparameters des Nahtspalt-Reduktionsschritts enthält; das Vorhersagen einer Unrundheit des Stahlrohrs (P) nach einem Rohraufweitungsschritt durch Eingeben des erfassten Datensatzes von Betriebsbedingungen (111) in das Modell zur Vorhersage der Unrundheit (M), wobei die Vorhersage vor Beginn des Pressbiegeschritts durch Verwenden des Verfahrens zur Vorhersage der Unrundheit des Stahlrohrs (P) durchgeführt wird, und Neukonfigurieren mindestens eines der eingestellten Werte des Betriebsparameters des Pressbiegeschritts oder des eingestellten Wertes des Betriebsparameters des Nahtspalt-Reduktionsschritts, wobei die vorhergesagte Unrundheit verringert wird.

8. Verfahren zur Herstellung von Stahlrohren (P), welches einen Schritt des Herstellens eines Stahlrohrs (P) umfasst, wobei das Verfahren zur Kontrolle der Unrundheit von Stahlrohren (P) gemäß einem der Ansprüche 1 bis 7 verwendet wird.

9. Vorrichtung (160) zur Vorhersage der Unrundheit eines Stahlrohrs (P) zum Vorhersagen der Unrundheit eines Stahlrohrs (P) nach einem Rohraufweitungsschritt, wobei das Stahlrohr (P) in einem Stahlrohrherstellungsprozess hergestellt wird und der Herstellungsprozess beinhaltet: einen Pressbiegeschritt des Verarbeitens eines Stahlblechs zu einem geformten Körper mit U-förmigem Querschnitt durch eine Vielzahl von Pressvorgängen mit einem Stempel (2, 12), einen Nahtspaltverringerungsschritt des Verringerns eines Nahtspaltabschnitts (G) des geformten Körpers mit U-förmigem Querschnitt, um ein offenes Rohr zu bilden, einen Schweißschritt des Verbindens der Enden des offenen Rohrs miteinander und den Rohraufweitungsschritt des Aufweitens eines Innendurchmessers des Stahlrohrs (P), dessen Enden miteinander verbunden sind, wobei die Vorrichtung **gekennzeichnet ist durch**
eine Basisdaten-Erfassungseinheit (110), die eine numerische Berechnung durchführt, welche als Eingabedaten einen Betriebsbedingungsdatensatz (111) aufweist, welcher einen oder mehrere Parameter, ausgewählt aus Eigenschaftsinformationen des Stahlblechs, einen oder mehrere Betriebsparameter, ausgewählt aus Betriebsparametern des Pressbiegevorgangs, und einen oder mehrere Betriebsparameter, ausgewählt aus Betriebsparametern des Nahtspaltverringerungsschritts, enthält, und als Ausgabedaten Informationen zur Unrundheit des Stahlrohrs (P) nach dem Rohraufweitungsschritt aufweist, wobei die Berechnung vielmals unter Änderung des Betriebsbedingungsdatensatzes (111) durchgeführt wird, und **durch** diese Berechnung eine Vielzahl von Datensätzen von Informationen zur Unrundheit des Stahlrohrs (P) nach dem Rohraufweitungsschritt entsprechend dem Betriebsbedingungsdatensatz (111) als Trainingsdaten erzeugt;
eine Einheit (130) zur Erzeugung eines Modells zur Vorhersage der Unrundheit, welche ein Modell zur Vorhersage der Unrundheit (M) erzeugt, das den Datensatz der Betriebsbedingungen (111) als Eingabedaten aufweist und die Informationen zur Unrundheit des Stahlrohrs (P) nach dem Rohraufweitungsschritt als Ausgabedaten aufweist, wobei die Erstellung des Modells **durch** maschinelles Lernen unter Verwendung der Vielzahl von Sätzen von Trainingsdaten, die von der Basisdatenerfassungseinheit (110) erzeugt wurden, durchgeführt wird;
eine Betriebsparameter-Erfassungseinheit (161), die online einen Betriebsbedingungsdatensatz (111) erfasst, welcher als Betriebsbedingung des Herstellungsschritts für das Stahlrohr (P) festgelegt werden soll;
eine Unrundheitsvorhersageeinheit (163), die die Unrundheitsinformationen des Stahlrohrs (P) nach dem Rohraufweitungsschritt entsprechend dem von der Betriebsparameter-Erfassungseinheit (161) erfassten Betriebsbedingungsdatensatz (111) vorhersagt, wobei die Vorhersage online unter Verwendung des von der Einheit (130) zur Erzeugung eines Modells zur Vorhersage der Unrundheit erzeugten Unrundheitsvorhersagemodells (M) durchgeführt wird; und
eine Betriebsbedingungs-Neukonfigurationseinheit (150), die einen oder mehrere Betriebsparameter neu konfiguriert, welche aus mindestens Betriebsparametern des Neukonfigurations-Zielschritts oder einem oder mehreren Betriebsparametern, ausgewählt aus Betriebsparametern eines Formungsschritts auf einer dem Neukonfigurations-Zielschritt nachgelagerten Seite, ausgewählt sind, wobei die Neukonfiguration auf der Grundlage der vorhergesagten Informationen zur Unrundheit des Stahlrohrs (P) durchgeführt wird.

10. Vorrichtung (160) zur Vorhersage der Unrundheit eines Stahlrohrs (P) gemäß Anspruch 9, umfassend
ein Endgerät, das eine Eingabeeinheit (165), die Eingabeinformationen auf der Grundlage einer Benutzerbedienung erfasst, und eine Anzeigeeinheit (166), welche die Informationen zur Unrundheit anzeigt, beinhaltet,
wobei die Betriebsparameter-Erfassungseinheit (161) einen Teil oder den gesamten Datensatz der Betriebsbedingungen (111) im Herstellungsschritt des Stahlrohrs (P) auf der Grundlage der von der Eingabeeinheit (165) erfassten Eingabeinformationen aktualisiert und
die Anzeigeeinheit (166) die von der Unrundheitsvorhersageeinheit (163) unter Verwendung des aktualisierten Betriebsbedingungen-Datensatzes (111) vorhergesagten Unrundheitsinformationen des Stahlrohrs (P) anzeigt.

## Revendications

1. Procédé de commande de défaut de circularité d'un tuyau en acier (P) pour un processus de fabrication d'un tuyau en acier (P), comprenant : une étape de cintrage à la presse consistant à transformer une tôle d'acier en un corps formé présentant une section transversale en forme de U par une pluralité de pressages au moyen d'un poinçon (2, 12) ; une étape de réduction de jeu de joint consistant à réduire une partie de jeu de joint (G) du corps formé présentant une section transversale en forme de U pour former un tuyau ouvert ; une étape de soudage consistant à relier des extrémités du tuyau ouvert l'une à l'autre ; et une étape d'expansion de tuyau consistant à augmenter un diamètre intérieur du tuyau en acier (P) présentant des extrémités reliées l'une à l'autre,
le procédé de commande étant **caractérisé en ce que**
une étape de prédiction d'informations de défaut de circularité du tuyau en acier (P) après l'étape d'expansion du tuyau,
la prédiction étant effectuée avant de commencer une étape cible de reconfiguration sélectionnée parmi une étape de cintrage final, une étape de cintrage à la presse, une étape de réduction de jeu de joint et l'étape d'expansion de tuyau incluse dans l'étape de fabrication de tuyau en acier (P), la prédiction étant effectuée à l'aide d'un procédé de prédiction de défaut de circularité du tuyau en acier (P), et
reconfigurer un ou plusieurs paramètres opérationnels sélectionnés parmi au moins des paramètres opérationnels de l'étape cible de reconfiguration ou un ou plusieurs paramètres opérationnels sélectionnés parmi des paramètres opérationnels d'une étape de traitement de formage sur un côté aval de l'étape cible de reconfiguration, la reconfiguration étant effectuée sur la base des informations de défaut de circularité prédites du tuyau en acier (P),
dans lequel le procédé de prédiction de défaut de circularité du tuyau en acier (P) comprend :
une étape d'acquisition de paramètre opérationnel consistant à acquérir en ligne un ensemble de données de condition opérationnelle (111) à définir en tant que condition opérationnelle de l'étape de fabrication du tuyau en acier (P), en tant qu'entrée d'un modèle de prédiction de défaut de circularité (M) du tuyau en acier (P) généré par un procédé de génération de modèle de prédiction de défaut de circularité du tuyau en acier (P); et
une étape de prédiction de défaut de circularité consistant à prédire des informations de défaut de circularité d'un tuyau en acier (P) après une étape d'expansion de tuyau en entrant l'ensemble de données de conditions opérationnelles (111) acquises dans l'étape d'acquisition de paramètre opérationnel dans le modèle de prédiction de défaut de circularité (M),
dans lequel le procédé de génération de modèle de prédiction de défaut de circularité du tuyau en acier (P) comprend :
une étape d'acquisition de données de base consistant à exécuter une opération numérique présentant un ensemble de données de condition opérationnelle (111) incluant un ou plusieurs paramètres sélectionnés parmi des informations d'attribut de la tôle d'acier, un ou plusieurs paramètres sélectionnés parmi des paramètres opérationnels de l'étape de cintrage à la presse, et un ou plusieurs paramètres sélectionnés parmi des paramètres opérationnels de l'étape de réduction de jeu de joint, en tant que données d'entrée, et présentant un défaut de circularité du tuyau en acier (P) après l'étape d'expansion de tuyau, en tant que données de sortie, l'exécution du calcul étant effectuée plusieurs fois tout en modifiant l'ensemble de données de condition opérationnelle (111), et générer, par l'intermédiaire de ce calcul, une pluralité d'ensembles de données de défaut de circularité du tuyau en acier (P) après l'étape d'expansion de tuyau correspondant à l'ensemble de données de condition opérationnelle (111) hors ligne en tant que données d'apprentissage ; et
une étape de génération de modèle de prédiction de défaut de circularité consistant à générer un modèle de prédiction de défaut de circularité (M) présentant l'ensemble de données de condition opérationnelle (111), en tant que données d'entrée, et présentant le défaut de circularité du tuyau en acier (P) après l'étape d'expansion du tuyau, en tant que données de sortie, la génération du modèle étant effectuée hors ligne par apprentissage automatique en utilisant la pluralité d'ensembles de données d'apprentissage générées dans l'étape d'acquisition de données de base.

2. Procédé de commande de défaut de circularité d'un tuyau en acier (P) selon la revendication 1, dans lequel l'étape d'acquisition de données de base comprend une étape consistant à calculer, en utilisant un procédé par éléments finis, le défaut de circularité du tuyau en acier (P) après l'étape d'expansion de tuyau à partir de l'ensemble de données de condition opérationnelle (111).

3. Procédé de commande de défaut de circularité d'un tuyau en acier (P) selon la revendication 1 ou 2, dans lequel le modèle de prédiction de défaut de circularité (M) comprend un ou plusieurs paramètres sélectionnés parmi les paramètres opérationnels de l'étape d'expansion de tuyau, en tant qu'ensemble de données de condition opérationnelle (111).

4. Procédé de commande de défaut de circularité d'un tuyau en acier (P) selon l'une quelconque des revendications 1 à 3, dans lequel l'étape de fabrication du tuyau en acier (P) comprend une étape de cintrage d'extrémité consistant à appliquer un cintrage à une extrémité de la tôle d'acier dans une direction de largeur avant l'étape de cintrage à la presse, et le modèle de prédiction de défaut de circularité (M) comprend un ou plusieurs paramètres sélectionnés parmi des paramètres opérationnels de l'étape de cintrage d'extrémité, en tant qu'ensemble de données de condition opérationnelle (111).

5. Procédé de commande de défaut de circularité d'un tuyau en acier (P) selon l'une quelconque des revendications 1 à 4, dans lequel le paramètre opérationnel de l'étape de cintrage à la presse comprend : des informations de position de presse et une quantité d'enfoncement de presse concernant une opération dans laquelle un poinçon (2, 12) utilisé dans l'étape de cintrage à la presse presse une tôle d'acier ; et le nombre de pressages effectués par le biais de l'étape de cintrage à la presse.

6. Procédé de commande de défaut de circularité d'un tuyau en acier (P) selon l'une quelconque des revendications 1 à 5, dans lequel l'apprentissage automatique à utiliser est un type d'apprentissage automatique sélectionné parmi un réseau neuronal, un apprentissage par arbre de décision, une forêt aléatoire, une régression de processus gaussien et une régression de vecteur de support.

7. Procédé de commande de défaut de circularité d'un tuyau en acier (P) selon l'une quelconque des revendications 1 à 6, comprenant : une étape consistant à acquérir un ensemble de données de condition opérationnelle (111) comprenant une valeur réelle d'informations d'attribut de la tôle d'acier, une valeur de consigne d'un paramètre opérationnel de l'étape de cintrage à la presse, et une valeur de consigne d'un paramètre opérationnel de l'étape de réduction de jeu de joint, prédire un défaut de circularité du tuyau en acier (P) après une étape d'expansion de tuyau en entrant l'ensemble de données de condition opérationnelle acquis (111) dans le modèle de prédiction de défaut de circularité (M), la prédiction étant effectuée avant de commencer l'étape de cintrage à la presse en utilisant le procédé de prédiction de défaut de circularité du tuyau en acier (P), et reconfigurer au moins l'une de la valeur de consigne du paramètre opérationnel de l'étape de cintrage à la presse ou de la valeur de consigne du paramètre opérationnel de l'étape de réduction de jeu de joint, dans lequel le défaut de circularité prédit est réduit.

8. Procédé de fabrication d'un tuyau en acier (P) comprenant une étape de fabrication d'un tuyau en acier (P) en utilisant le procédé de commande de défaut de circularité d'un tuyau en acier (P) selon l'une quelconque des revendications 1 à 7.

9. Dispositif de prédiction de défaut de circularité d'un tuyau en acier (P) pour prédire un défaut de circularité d'un tuyau en acier (P) après une étape d'expansion de tuyau, dans lequel le tuyau en acier (P) est fabriqué dans un procédé de fabrication du tuyau en acier (P), le procédé de fabrication comprenant : une étape de cintrage à la presse consistant à transformer une tôle d'acier en un corps formé présentant une section transversale en forme de U par une pluralité de pressages au moyen d'un poinçon (2, 12) ; une étape de réduction de jeu de joint consistant à réduire une partie de jeu de joint (G) du corps formé présentant une section transversale en forme de U pour former un tuyau ouvert ; une étape de soudage consistant à relier des extrémités du tuyau ouvert l'une à l'autre ; et l'étape d'expansion de tuyau consistant à augmenter un diamètre intérieur du tuyau en acier (P) présentant des extrémités reliées l'une à l'autre,
le dispositif étant **caractérisé par**
une unité d'acquisition de données de base (110) qui exécute une opération numérique présentant un ensemble de données de condition opérationnelle (111) incluant un ou plusieurs paramètres sélectionnés parmi des informations d'attribut de la tôle d'acier, un ou plusieurs paramètres opérationnels sélectionnés parmi des paramètres opérationnels de l'étape de cintrage à la presse, et un ou plusieurs paramètres opérationnels sélectionnés parmi des paramètres opérationnels de l'étape de réduction de jeu de joint, en tant que données d'entrée, et présentant des informations de défaut de circularité du tuyau en acier (P) après l'étape d'expansion de tuyau, en tant que données de sortie, le calcul étant effectué plusieurs fois tout en modifiant l'ensemble de données de condition opérationnelle (111), et qui génère, par l'intermédiaire de ce calcul, une pluralité d'ensembles de données de défaut de circularité du tuyau en acier (P) après l'étape d'expansion de tuyau correspondant à l'ensemble de données de condition opérationnelle (111) en tant que données d'apprentissage ;
une unité de génération de modèle de prédiction de défaut de circularité (130) qui génère un modèle de prédiction de défaut de circularité (M) présentant l'ensemble de données de condition opérationnelle (111), en tant que données d'entrée, et présentant les informations de défaut de circularité du tuyau en acier (P) après l'étape d'expansion de tuyau, en tant que données de sortie, la génération du modèle étant effectuée par apprentissage automatique en utilisant la pluralité d'ensembles de données d'apprentissage générées par l'unité d'acquisition de données de base (110) ; une unité d'acquisition de paramètre opérationnel (161) qui acquiert en ligne un ensemble de données de condition opérationnelle (111) à définir comme condition opérationnelle de l'étape de fabrication d'un tuyau en acier (P) ;
une unité de prédiction de défaut de circularité (163) qui prédit des informations de défaut de circularité du tuyau en acier (P) après l'étape d'expansion de tuyau correspondant à l'ensemble de données de condition opérationnelle (111) acquises par l'unité d'acquisition de paramètre opérationnel (161), la prédiction étant effectuée en ligne à l'aide du modèle de prédiction de défaut de circularité (M) généré par l'unité de génération de modèle de prédiction de défaut de circularité (130) ; et
une unité de reconfiguration de condition opérationnelle (150) qui reconfigure un ou plusieurs paramètres opérationnels sélectionnés parmi au moins des paramètres opérationnels de l'étape cible de reconfiguration ou un ou plusieurs paramètres opérationnels sélectionnés parmi des paramètres opérationnels d'une étape de traitement de formage sur un côté aval de l'étape cible de reconfiguration, la reconfiguration étant effectuée sur la base des informations de défaut de circularité prédites du tuyau en acier (P).

10. Dispositif de prédiction de défaut de circularité d'un tuyau en acier (P) (160) selon la revendication 9, comprenant
un dispositif terminal comprenant une unité d'entrée (165) qui acquiert des informations d'entrée sur la base d'une opération d'un utilisateur, et une unité d'affichage (166) qui affiche les informations de défaut de circularité,
dans lequel l'unité d'acquisition de paramètre opérationnel (161) met à jour une partie ou la totalité de l'ensemble de données de condition opérationnelle (111) dans l'étape de fabrication du tuyau en acier (P) sur la base des informations d'entrée acquises par l'unité d'entrée (165), et
l'unité d'affichage (166) affiche les informations de défaut de circularité du tuyau en acier (P) prédites par l'unité de prédiction de défaut de circularité (163) en utilisant l'ensemble de données de condition opérationnelle mis à jour (111).
